# EUROPEAN PATENT SPECIFICATION

(11) **EP 2 542 642 B1**
(45) Date of publication and mention of the grant of the patent: **15.06.2016**
(21) Application number: 11709766.7
(22) Date of filing: 07.03.2011
(51) Int. Cl.: C09K 8/10, C09K 8/68

(54) **CLEAN VISCOSIFIED TREATMENT FLUIDS AND ASSOCIATED METHODS**
REINE VISKOSIERTE BEHANDLUNGSFLUIDE UND ZUGEHÖRIGE VERFAHREN
FLUIDES DE TRAITEMENT PROPRES RENDUS VISQUEUX ET PROCÉDÉS ASSOCIÉS

(30) Priority: 05.03.2010 US 718477
(43) Date of publication of application: 09.01.2013
(73) Proprietor: Halliburton Energy Services, Inc., Duncan, OK 73536 (US)
(72) Inventor: LOVELESS, David, M., Duncan, OK 73533 (US); HARRIS, Phillip, C., Duncan, OK 73533 (US); SAINI, Rajesh, K., Cypress TX 77433 (US); TONMUKAYAKUL, Narongsak, Duncan, OK 73533 (US); LIANG, Feng, Cypress TX 77429 (US); FUNKHOUSER, Gary, P., Duncan, OK 73533 (US); FITZGERALD, Rocky, M., Waurika, OK 73573 (US); HOLTSCLAW, Jeremy, Lawton, OK 73501 (US); NORMAN, Lewis, R., Duncan, OK 73533 (US)
(74) Representative: Ono, Shusuke
(86) International application number: PCT/GB2011/000316
(87) International publication number: WO 2011/107757

(56) References cited:
- US-A- 5 624 886
- US-A1- 2002 169 085
- US-A1- 2006 116 296
- US-A1- 2008 058 229

## Description

### BACKGROUND OF THE INVENTION

The present invention relates to low environmental impact treatment fluids useful for subterranean operations, and more particularly, to low environmental impact treatment fluids comprising a viscosifying agent and a compliant crosslinking agent that comprises an iron ion and a non-iron crosslinking metal ion, and methods of use employing such treatment fluids to treat subterranean formations.

The present invention relates to methods of treating subterranean formations or well bores, and more specifically, to treatment fluids involving viscosified fluids for subterranean treatment applications. Viscosified treatment fluids may be used in a variety of subterranean treatments. Such treatments include, but are not limited to, stimulation operations and completion operations. As used herein, the term "treatment," or "treating," refers to any subterranean operation that uses a fluid in conjunction with a desired function and/or for a desired purpose. The term "treatment," or "treating," does not imply any particular action by the fluid.

Fracturing treatments using aqueous viscosified treatment fluids are commonly carried out in subterranean formations (including those that contain hydrocarbons as well as those that do not) penetrated by well bores to accomplish a number of purposes, one of which is to increase the permeability of the formation. The resultant increase in formation permeability normally results in an increase in the recovery of hydrocarbons from the formation. The fractures may be created by introducing an aqueous viscosified fluid into the formation at a rate sufficient to exert a sufficient pressure on the formation to create and extend fractures therein. Generally, an aqueous viscosified fluid is introduced into the hydrocarbon producing zone within a subterranean formation. The aqueous viscosified fluid suspends proppant particles that are to be placed in the fractures to prevent the fractures from fully closing (once the hydraulic pressure is released), thereby forming conductive channels within the formation through which hydrocarbons can flow.

The viscosified treatment fluids that are used in subterranean operations generally are aqueous-based fluids that comprise a viscosifying agent, which may be crosslinked. These viscosifying agents may be biopolymers or synthetic polymers. Common biopolymer gelling agents include, e.g., galactomannan gums, cellulosic derivatives, and other polysaccharides. However, in high temperature applications, these viscosifying agents can degrade, which can cause the viscosified treatment fluid to prematurely lose viscosity. Various synthetic polymer viscosifying agents have been developed for use in viscosified treatment fluids. While some synthetic polymers have achieved some success, there are continuing needs for improved viscosifying agents that are stable at relatively high temperatures.

The viscosity of a viscosified treatment fluid may be increased by crosslinking the viscosifying agent in the fluid. Viscosifying agent molecules are typically crosslinked through a crosslinking reaction with a crosslinking agent that has been added to the treatment fluid. These crosslinking agents generally comprise a metal ion. Examples include boron, aluminum, antimony, zirconium, magnesium, or titanium. Generally, the metal of a crosslinking agent interacts with at least two gelling agent molecules to form a crosslink between them. Under the appropriate conditions (e.g., pH and temperature), the crosslinks that form between viscosifying agent molecules may increase the viscosity of a viscosified treatment fluid.

The viscosified treatment fluids used in subterranean operations are oftentimes aqueous-based fluids comprising viscosifying agents that increase the viscosities of the treatment fluids to, among other things, enhance the ability of the treatment fluids to suspend sand or other particulate materials. These viscosifying agents are typically polysaccharides that when hydrated and at sufficient concentration are capable of forming a viscous solution.

US 2002/169085 discloses a well completion or stimulation fluid, comprising (i) a carrier fluid; (ii) a viscoelastic surfactant; and (iii) a fluid loss control additive comprising at least one polymer and at least one crosslinker. The fluid may further comprise proppant or gravel, if it is intended for use as a fracturing fluid or a gravel packing fluid. US 2002/169085 also discloses methods of fracturing a subterranean formation using the fracturing fluid and methods of gravel packing a wellbore using the gravel packing fluid.

US 5624886 discloses a method for fracturing a subterranean formation in which a hydratable polymer, crosslinking agent and breaker are combined in an aqueous carrier to form a gelled fracturing fluid. The breaker is comprised of a substantially insoluble oxidant which is granulated and formed into a pellet or pill with a suitable binder. The pellet so formed can also contain a chelating agent and an activator in order to enhance the rate of breaking. The substantially insoluble oxidant is selected from the group consisting of alkaline earth and zinc salts of peroxide, perphosphate, perborate, and percarbonate.

US 2008/058229 discloses a polyelectrolyte complex for the controlled release of an oil and gas field chemical selected from the group consisting of (a) a gel-forming or cross-linking agent, (b) a scale inhibitor, (c) a corrosion inhibitor, (d) an inhibitor of asphaltene or wax deposition, (e) a hydrogen sulfide scavenger, (f) a hydrate inhibitor, (g) a breaking agent, and a surfactant.

US 2006/116296 discloses an under-balanced drilling fluid additive comprising a choline salt that reduces reactive shale and/or clay swelling. US 2006/116296 also discloses a method for under-balanced drilling using a drilling fluid comprising the choline salt additive.

The use of these conventional crosslinked viscosifying agents may give rise to other problems. First, these viscosifying agents contain a considerable amount of insoluble residue that may lead to poor permeability and conductivity thereby leading to decreased hydrocarbon production. Furthermore, most fluid systems employing such crosslinked viscosifying agents may be unstable at high temperatures and shear-sensitive. In particular, high temperature or shear may lead to loss of viscosity. These treatment fluids have not demonstrated desirable proppant particle suspending ability or transport capability. In addition, commonly used treatment fluids may be harmful to the environment and require special processing prior to disposal. Thus, it is desirable to use viscosifying agents for treatment fluids that are capable of better suspension and transport and produce low environmental impact treatment fluids. It would also be desirable to generate treatment fluids that do not suffer shear degradation and thereby avoid the above limitations.

### SUMMARY OF THE INVENTION

The present invention relates to low environmental impact treatment fluids useful for subterranean operations, and more particularly, to low environmental impact treatment fluids comprising a viscosifying agent and a compliant crosslinking agent that comprises an iron ion and an aluminum ion, and methods of use employing such treatment fluids to treat subterranean formations.

According to one aspect of the present invention, there is provided a method comprising providing a treatment fluid comprising an aqueous base fluid, a viscosifying agent, and a crosslinking agent that comprises an iron ion and an aluminum ion; and placing the treatment fluid in a subterranean formation Advantageously, the treatment fluid is a low environmental impact treatment fluid. Also advantageously, the crosslinking agent is a compliant crosslinking agent.

Also disclosed are non-iron crosslinking metal ions such as a titanium ion, a chromium(III) ion, a copper ion, a zinc ion, a zinconium ion, a magesium ion, and any combination thereof.

In an embodiment, the viscosifying agent is selected from the group consisting of a polysaccharide, a cellulose, a starch, a gelatin, an acrylamide, an acrylate, and any combination thereof.

In an embodiment, the viscosifying agent is a compound selected from the group consisting of: a carboxymethylguar, a carboxymethylhydroxyethyl guar, a carboxymethylhydroxypropylguar, a hydroxyethylcellulose, a carboxyethylcellulose, a carboxymethylcellulose, a carboxymethylhydroxyethylcellulose, a diutan gum, a xanthan gum, a galactomannan, a hydroxyethylguar, a hydroxypropylguar, a scleroglucan, a wellan, a native starch, a modified starch, a cook-up starch, a pre-gelatinized starch, a chitosan, an alginate, a carrageenan, and any combination thereof.

In an embodiment, the viscosifying agent comprises a polysaccharide and a starch.

In an embodiment, the viscosifying agent comprises a cellulosic viscosifying agent and a polysaccharide.

In an embodiment, the subterranean formation comprises a bottom hole temperature of up to and including about 275°F (135 °C).

In an embodiment, the viscosifying agent is a viscosifying agent selected from the group consisting of carboxyethylcellulose, carboxymethylcellulose, carboxymethylhydroxyethylcellulose, and any combination thereof.

In an embodiment, the treatment fluid further comprises an encapsulated breaker.

In an embodiment, the treatment fluid further comprises a dual-functional additive selected from the group consisting of ethyl formate, propyl formate, butyl formate, amyl formate, anisyl formate, methyl acetate, propyl acetate, triacetin, butyl propionate, isoamyl propionate, ethyl lactate, methyl butyrate, ethyl isobutyrate, butyl isobutyrate, diethyl malonate, butyl ethyl malonate, dimethyl succinate, diethyl succinate, diethyl malate, diethyl tartrate, dimethyl tartrate, methyl citrate, and any combination thereof.

In an embodiment, the treatment fluid is placed in the subterranean formation as part of a subterranean operation selected from the group consisting of a drilling operation, a fracturing operation, a completion operation, and a workover operation.

In an embodiment, the treatment fluid comprises a viscosifying agent comprising carboxymethylcellulose and a crosslinking agent that comprises an iron ion and an aluminum ion; and further comprises: a surfactant comprising sodium lauryl sulfate and polyoxyethylene (20) sorbitan monolaurate.

In an embodiment, the treatment fluid further comprises an encapsulated citric acid breaker, a dual-functional additive comprising triethyl citrate or a combination thereof.

According to another aspect of the present invention, there is provided a method comprising providing a treatment fluid comprising an aqueous base fluid, a viscosifying agent, a crosslinking agent that comprises an iron ion and an aluminum ion, a breaker; and placing the treatment fluid in a subterranean formation. Advantageously, the treatment fluid is a low environmental impact treatment fluid. Also advantageously, the viscosifying agent is a compliant viscosifying agent. Still advantageously, the crosslinking agent is a compliant crosslinking agent. Yet more advantageously, the breaker is a compliant breaker.

According to another aspect of the present invention, there is provided a method comprising: providing a low environmental impact treatment fluid comprising: an aqueous base fluid, a viscosifying agent, a crosslinking agent that comprises an iron ion and an aluminum ion, a dual-functional additive; and placing the treatment fluid in a subterranean formation. Advantageously, the treatment fluid is a. low environmental impact treatment fluid. Also advantageously, the viscosifying agent is a compliant viscosifying agent. Still advantageously, the crosslinking agent is a compliant crosslinking agent. Yet more advantageously, the dual-functional additive is a compliant dual-functional additive.

In an embodiment, the viscosifying agent is selected from the group consisting of a polysaccharide, a cellulose, a gelatin, an acrylamide, an acrylate, and any combination thereof. In an embodiment, the viscosifying agent comprises a blend of a first viscosifying agent and a second viscosifying agent.

In an embodiment, the first viscosifying agent is a cellulose derivative selected from the group consisting of: a carboxymethylguar, a carboxymethylhydroxyethylguar, a carboxymethylhydroxypropylguar, a hydroxyethylcellulose, a carboxyethylcellulose, a carboxymethylcellulose, a carboxymethylhydroxyethylcellulose, and any combination thereof.

In an embodiment, the second viscosifying agent is a polysaccharide selected from the group consisting of: a diutan gum, a xanthan gum, a galactomannan, a hydroxyethylguar, a hydroxypropylguar, a scleroglucan, a wellan, a native starch, a modified starch, a cook-up starch, a pre-gelatinized starch, a chitosan, an alginate, a carrageenan, and any combination thereof.

In an embodiment, the crosslinking agent comprises an aluminum ion selected from the group consisting of: a titanium ion, an aluminum ion, a chromium(III) ion, a copper ion, a zinc ion, a zirconium ion, a magnesium ion, and any combination thereof.

In an embodiment, the subterranean formation comprises a bottom hole temperature of up to and including about 275°F (135 °C).

In an embodiment, the treatment fluid is placed in the subterranean formation as part of a subterranean operation selected from the group consisting of a drilling operation, a fracturing operation, a completion operation, and a workover operation.

In an embodiment, the dual-functional additive is a liquid selected from the group consisting of: ethyl formate, propyl formate, butyl formate, amyl formate, anisyl formate, methyl acetate, propyl acetate, triacetin, butyl propionate, isoamyl propionate, ethyl lactate, methyl butyrate, ethyl isobutyrate, butyl isobutyrate, diethyl malonate, butyl ethyl malonate, dimethyl succinate, diethyl succinate, diethyl malate, diethyl tartrate, dimethyl tartrate, triethyl citrate, and any combination thereof

In an embodiment, the treatment fluid.further comprises an encapsulated breaker.

According to another aspect of the present invention, there is provided a method comprising: providing a fracturing fluid comprising an aqueous base fluid, a viscosifying agent, and a crosslinking agent that comprises an iron ion and an aluminum ion; and introducing the fracturing fluid into at least a portion of a subterranean formation at a rate and pressure sufficient to create or enhance at least one or more fractures in the subterranean formation. Advantageously, the fracturing fluid is a low environmental impact treatment fluid. Also advantageously, the viscosifying agent is a compliant viscosifying agent. Still advantageously, the crosslinking agent is a compliant crosslinking agent. It will be appreciated that the embodiments of the treatment fluid above may also be embodiments of the fracturing fluid described now.

Other features and advantages of the present invention will be readily apparent to those skilled in the art upon a reading of the description of preferred embodiments that follows.

### BRIEF DESCRIPTION OF THE DRAWINGS

These drawings illustrate certain aspects of some of the embodiments of the present invention, and should not be used to limit or define the invention.
Figure 1 shows the thermal stability profile of treatment fluids comprising 60 lb/Mgal xanthan gel (7.2 kg/m³), and a 60 lb/Mgal (7.2 kg/m³) xanthan gel plus 300 lb/Mgal (35.9 kg/m³) cornstarch gel.
Figure 2 shows the viscosity profile of treatment fluids comprising a guar gel alone, starch gel alone, and a guar/starch gel.
Figure 3 shows the thermal stability of treatment fluids comprising 60 lb/Mgal (7.2 kg/m³) of Xanthan and 450 Ib/Mgal (53.9 kg/m³) starch at various temperatures.
Figure 4 shows the thermal stability of a treatment fluid comprising 60 lb/Mgal (7.2 kg/m³) of Guar and 450 lb/Mgal (53.9 kg/m³) starch at various temperatures.
Figure 5 shows the effect of the change in guar concentration on a guar/starch fluid.
Figure 6 shows the enhancement of starch/polysaccharide gel in treatment fluids through the use of oxygen scavengers.
Figure 7 shows the affect of pH on the viscosity of starch/polysaccharide containing treatment fluids.
Figures 8 and 9 show the viscosity profile of treatment fluids comprising 60 Ib/Mgal (7.2 kg/m³) guar and 300 lb/Mgal (35.9 kg/m³) cornstarch with a delayed released pH lowering component.
Figure 10 shows the viscosity profile of polysaccharide/starch treatment fluids with a redox active metal ion.
Figure 11 shows the sand transport studies showing the ability of guar/starch and xanthan/starch mixtures to suspend sand.
Figure 12 shows Couette viscosity of guar containing treatment fluids with increasing amounts of starch.
Figure 13 shows the viscosity profile of 80 Ib/Mgal (9.6 kg/m³) xanthan gel crosslinked and uncrosslinked.
Figure 14 shows the effect of pH on xanthan crosslinked with an iron/aluminum crosslinker.
Figure 15 shows the effect of increasing the iron ion content of an iron/aluminum crosslinker used on a xanthan fluid.
Figure 16 shows the viscosity profile of xanthan fluids crosslinked with Fe/Al versus crosslinked with Al alone.
Figure 17 shows the viscosity profile of various amounts of ligand in an aluminum-only crosslinker as compared to an Al/Fe crosslinker in xanthan treatment fluids.
Figure 18 shows the viscosity profile of treatment fluids with 80 lb/Mgal (9.6 kg/m³) xanthan crosslinked Fe/Al compared to 80 lb/Mgal (9.6 kg/m³) xanthan crosslinked with Al only.
Figure 19 shows the thermal stability of 80 lb/Mgal (9.6 kg/m³) xanthan sample crosslinked with Fe/Al at various temperatures.
Figures 20 and 21 show the breaking of a CMC/Al-crosslinked gel using fat-encapsulated citric acid.
Figure 22 shows oscillatory measurements of G' (storage modulus) and G" (loss modulus) for treatment fluids.
Figure 23 shows the strain-rate frequency superposition results for treatment fluids.
Figure 24 shows a relationship between network relation and imposed shear rate.
Figure 25 shows a relationship between G'p and imposed shear rate.
Figure 26 shows the complex viscosity-frequency relationship for treatment fluids as a function of imposed shear rate.
Figure 27 shows the relationship between zero shear viscosity and imposed shear rate for treatment fluids.
Figure 28 shows the proppant settling analysis at a constant shear rate of 20 sec⁻¹.

### DESCRIPTION OF PREFERRED EMBODIMENTS

The present invention relates to low environmental impact treatment fluids useful for subterranean operations, and more particularly, to low environmental impact treatment fluids comprising a viscosifying agent and a compliant crosslinking agent that comprises an iron ion and an aluminum ion, and methods of use employing such treatment fluids to treat subterranean formations.

The treatment fluids of the present invention may comprise a compliant crosslinking agent that comprises an iron ion and an aluminum ion (that is, a metal ion capable of crosslinking). As used herein, the term "compliant" refers to materials described in the US Code of Federal Regulations: 21 CFR §§ 170-199 (substances approved as food items, approved for contact for food, or approved for use as an additive to food) and that are prepared from food-grade materials. More particularly, as used herein, the term "compliant" refers to materials described in 21 CFR §§ 170-199 as at 5 March 2010.

Of the many advantages of the compositions and related methods of the present invention (only some of which are alluded to herein), is that treatment fluids of the present invention may improve oil and/or gas production by using a compliant crosslinking agent that comprises an iron ion and an aluminum ion. The compliant crosslinking agent of the invention may present reduced chemical concerns to the environment, humans, and animals according to the above-cited laws and regulations. In fact, in certain embodiments, the need for costly procedures needed to dispose of the treatment fluids containing a non-compliant crosslinking agents, in order to ensure that such treatment fluids do not contact the marine environment and groundwater, are eliminated. Additionally, the compliant crosslinking agent may provide effective treatment of the formation without excessive damage caused by the use of non-compliant crosslinkers. The compliant crosslinking agent used in the present invention may, among other things, enhance regain permeability and provide better conductivity due to the substantial absence of insoluble residue. In certain embodiments, the treatment fluids of the present invention may be more shear-stable, temperature stable and therefore better suited for use in applications that require wider temperature ranges. In addition, the treatment fluids of the present invention may have controllable gel viscosity reduction, better elastic properties and be more suitable for carrying proppant materials during subterranean operations. In some embodiments of the present invention the compliant crosslinker may be combined with a compliant viscosifying agent for additional benefits. In some embodiments, it may be desirable for all components in a treatment fluid to be compliant.

In accordance with embodiments of the present invention, the treatment fluids generally comprise an aqueous base fluid, a viscosifying agent, and a compliant crosslinking agent that comprises an iron ion and an aluminum ion.

By way of example, the aqueous base fluid of embodiments of the treatment fluids of the present invention may be any fluid comprising an aqueous component. Suitable aqueous components include, but not limited to, fresh water, salt water, brine (*e.g.,* saturated or unsaturated saltwater), seawater, pond water and any combination thereof. Generally, the aqueous component may be from any source. Suitable aqueous base fluids may include foams. In certain embodiments, the viscosifying agents of the present invention may be difficult to dissolve in brines. To solve this problem, in one embodiment of the present invention, the viscosifying agent may be hydrated in fresh water prior to addition of the salt solution. One of ordinary skill in the art, with the benefit of the present disclosure, will recognize suitable aqueous base fluids for use in the treatment fluids and methods of the present invention. In some embodiments, the aqueous base fluid may be present in a treatment fluid of the present invention in an amount in the range of about 75% to about 99.9% of the treatment fluid. In some embodiments, fresh water may be the preferred aqueous base fluid.

The viscosifying agent of the present invention may be any suitable viscosifying agent that may perform the desired function. In certain embodiments, the viscosifying agent of the present invention may be a compliant viscosifying agent. The viscosifying agents suitable for use in the treatment fluids useful in the methods of the present invention may comprise any substance capable of increasing the viscosity of the treatment fluids (*e.g.* a polymeric material) and that are capable of forming a crosslink in a crosslinking reaction in the presence of a crosslinking agent. The viscosifying agents may be biopolymers, polysaccharides, and/or derivatives thereof that contain one or more of these monosaccharide units: galactose, mannose, glucoside, glucose, xylose, arabinose, fructose, glucuronic acid, or pyranosyl sulfate. The term "derivative" includes any compound that is made from one of the listed compounds, for example, by replacing one atom in the listed compound with another atom or group of atoms, rearranging two or more atoms in the listed compound, ionizing one of the listed compounds, or creating a salt of one of the listed compounds. Examples of suitable viscosifying agents include, but are not limited to, cellulose derivatives, carboxymethylguars, carboxymethylhydroxyethylguars, carboxymethylhydroxypropylguars, hydroxyethylcelluloses, carboxyethylcelluloses, carboxymethylcelluloses, carboxymethylhydroxyethylcelluloses, diutan gums, xanthan gums, galactomannans, hydroxyethylguars, hydroxypropylguars, scleroglucans, wellans, starches, acrylamides, acylates, chitosans, alginates, carrageenans, and any combination thereof.

In some preferred embodiments, the viscosifying agent is a compliant cellulosic viscosifying agents such as any carboxylated, cellulosic viscosifying agent capable of increasing the viscosity of the treatment fluids and capable of forming a crosslink in the presence of a crosslinking agent. Examples of suitable compliant cellulosic viscosifying agents include, but are not limited to carboxyethylcellulose, carboxymethylcellulose (CMC), carboxymethylhydroxyethylcellulose, and any combination thereof. The term "derivative" includes any compound that is made from one of the listed compounds, for example, by replacing one atom in the listed compound with another atom or group of atoms, rearranging two or more atoms in the listed compound, ionizing one of the listed compounds, or creating a salt of one of the listed compounds. When used, the compliant cellulosic viscosifying agent may be present in the treatment fluids useful in the methods of the present invention in an amount sufficient to provide the desired viscosity.

In certain embodiments of the present invention, the viscosifying agent may be a combination comprising starch blends and a polysaccharide. As used herein, the term "starch" refers to a polysaccharide gum. Examples of starch blends include, but are not limited to, native starches, modified starches, cook-up starches, pre-gelatinized starches, and any combination thereof. Examples of suitable polysaccharides include, but are not limited to, carboxymethylguars, carboxymethylhydroxyethylguars, carboxymethylhydroxypropylguars, diutan gums, xanthan gums, galactomannans, hydroxyethylguars, hydroxypropylguars, scleroglucans, chitosans, alginates, carrageenans, and any combination thereof. In an embodiment, these viscosifying agents may have unique thickening properties that may be used in high temperature treatment fluids. Without wishing to be limited by theory, the polysaccharide component of such viscosifying agents may provide slight suspension of the additional starch component at room temperature. This may allow for the formation of low-viscosity treatment fluids that may then be easily pumped at low pressure to the desired treatment zone. At that point, when temperatures increase to above about 130°F (54 °C) the viscosifying agents may give rise to large increases in the viscosity of the treatment fluids to better support proppant transport. In an embodiment, this synergistic effect of the starch component and polysaccharide component of the treatment fluids may give rise to treatment fluids better suited for use in subterranean applications conducted in a wide temperature range.

In certain embodiments of the present invention, the viscosifying agent may be a combination comprising a cellulose derivative and a polysaccharide. In an embodiment, treatment fluids comprising these viscosifying agents may have better suspending ability and transportability of proppant particles than treatment fluids prepared with a single viscosifying component. These treatment fluids may have lower viscosity and higher elasticity. The low viscosity may lead to easier pumping of the treatment fluid into the formation and the higher elasticity may lead to better suspending ability for the treatment fluid. The use of a mixture of viscosifying agents as described above may provide superior treatment fluids for use in subterranean applications. In embodiments combining a starch and a cellulosic viscosifying agent, the compliant cellulosic viscosifying agents described above may be preferred.

The viscosifying agent may be present in the treatment fluids useful in the methods of the present invention in an amount sufficient to provide the desired viscosity. In some embodiments, the viscosifying agents may be present in an amount in the range of from about 0.01% to about 10% by weight of the treatment fluid. In an embodiment, the viscosifying agents may be cellulose derivatives present in an amount in the range of from about 0.1% to about 1% by weight of the treatment fluid. In some embodiments, the viscosifying agents may be starches present in the range of from about 3% to 5% by weight of the treatment fluid. In other embodiments, the viscosifying agents may be polysaccharides present from about 0.1% to about 3% by weight of the treatment fluid.

Compliant crosslinkers suitable for use the present invention generally comprise an iron ion and an aluminum ion. The crosslinking agents may comprise an iron ion and an aluminum ion capable of crosslinking at least two molecules of the viscosifying agent. Also disclosed are non-iron crosslinking metal ions such as titanium ions, chromium(III) ions, copper ions, zinc ions, zirconium ions, and magnesium ions. These ions may be provided by providing any compound that is capable of producing one or more of these ions as is well known in the art. Examples of such ion-containing compounds include, but are not limited to, zirconium compounds contained within 21 CFR §§ 170-199, aluminum compounds contained within 21 CFR §§ 170-199, titanium compounds contained within 21 CFR §§ 170-199, chromium(III) compounds contained within 21 CFR §§ 170-199, iron(II) compounds contained within 21 CFR §§ 170-199, iron(III) compounds contained within 21 CFR §§ 170-199, copper compounds contained within 21 CFR §§ 170-199, zinc compounds contained within 21 CFR §§ 170-199, and combinations thereof. Examples of such suitable compliant ion-containing compounds include but are not limited to ammonium zirconium carbonate, zirconium citrate, zirconium lactate citrate, zirconium oxide, titanium dioxide, aluminum nicotinate, aluminum sulfate, aluminum sodium sulfate, aluminum ammonium sulfate, chromium caseinate, chromium potassium sulfate, zinc sulfate, zinc hydrosulfite, magnesium chloride, magnesium sulfate, magnesium gluconate, copper sulfate, and copper gluconate.

The compliant crosslinking agent of the present invention may impart both higher gel viscosity and quicker viscosity reduction than using a single metal ion crosslinker alone. Thus, the treatment fluids of the present invention may be cleaner fluids thereby having higher regain conductivity and better overall production.

In certain embodiments of the present invention, the compliant crosslinking agent may be formulated to remain inactive until it is "activated" by, among other things, certain conditions in the fluid *(e.g.,* pH, temperature, etc.) and/or interaction with some other substance. In some embodiments, the activation of the compliant crosslinking agent may be delayed by encapsulation with a coating (e.g., a porous coating through which the crosslinking agent may diffuse slowly, or a degradable coating that degrades downhole) that delays the release of the compliant crosslinking agent until a desired time or place. In some embodiments, additives may be added to delay crosslinking of the viscosifying agent. In one example, a chelating agent may be added to delay crosslinking time. The choice of a particular compliant crosslinking agent will be governed by several considerations that will be recognized by one skilled in the art, including but not limited to the following: the type of viscosifying agent included, the molecular weight of the viscosifying agent(s), the conditions in the subterranean formation being treated, the safety handling requirements, the pH of the treatment fluid, temperature, and/or the desired delay for the compliant crosslinking agent to crosslink the viscosifying agent molecules.

The compliant crosslinking agents may be present in the treatment fluids useful in the methods of the present invention in an amount sufficient to provide a desired degree of crosslinking between molecules of the viscosifying agent. In certain embodiments, the crosslinking agent may be present in the treatment fluids of the present invention in an amount in the range of from about 0.001% to about 1% by weight of the treatment fluid. In certain embodiments, the crosslinking agent may be present in the treatment fluids of the present invention in an amount in the range of from about 0.005% to about 0.1% by weight of the treatment fluid. While compliant crosslinking agents may be added in a concentrated solution, the numerical ranges given above refer to the percentage of metal ions by weight of the treatment fluid. One of ordinary skill in the art, with the benefit of this disclosure, will recognize the appropriate amount of compliant crosslinking agent to include in a treatment fluid of the present invention based on, among other things, the temperature conditions of a particular application, the type of viscosifying agents used, the molecular weight of the viscosifying agents, the desired degree of viscosification, and/or the pH of the treatment fluid.

In certain embodiments, the treatment fluids of the present invention may be a foamed fluid *(e.g.,* a liquid that comprises a gas such as nitrogen, carbon dioxide, air, or methane). As used herein, the term "foamed" also refers to fluids such as commingled fluids. In some embodiments, it may be desirable that the treatment fluid is foamed to, among other things, reduce the amount of fluid that is required in a water sensitive subterranean formation, to reduce fluid loss in the formation, and/or to provide enhanced proppant suspension. In examples of such embodiments, the gas may be present in the range of from about 5% to about 98% by volume of the treatment fluid, and more preferably in the range of from about 20% to about 90% by volume of the treatment fluid. The amount of gas to incorporate in the fluid may be affected by many factors including the viscosity of the fluid and the wellhead pressures involved in a particular application. One of ordinary skill in the art, with the benefit of this disclosure, will recognize the how much gas, if any, to incorporate into the treatment fluids of the present invention.

Depending on the use of the treatment fluid, in some embodiments, other additives may optionally be included in the treatment fluids of the present invention. Examples of such additives may include, but are not limited to, salts, pH control additives, surfactants, breakers, biocides, fluid loss control agents, stabilizers, chelating agents, scale inhibitors, gases, mutual solvents, particulates, corrosion inhibitors, oxidizers, reducers, and any combination thereof. A person of ordinary skill in the art, with the benefit of this disclosure, will recognize when such optional additives should be included in a treatment fluid used in the present invention, as well as the appropriate amounts of those additives to include.

The treatment fluids of the present invention also may comprise breakers capable of reducing the viscosity of the treatment fluid at a desired time. Examples of such suitable breakers for treatment fluids of the present invention include, but are not limited to, sodium chlorites, hypochlorites, perborate, persulfates, peroxides, including organic peroxides. Other suitable breakers include, but are not limited to, suitable acids and peroxide breakers, delinkers, as well as enzymes that may be effective in breaking viscosified treatment fluids. In some preferred embodiments, the breaker may be a compliant breaker such as citric acid, other acids ore chelating molecules found in 21 CFR §§ 170-199 (e.g. tetrasodium EDTA 175.300), oxidizers found in 21 CFR §§ 170-199 (e.g. ammonium persulfate 175.150), enzymes found within 21 CFR §§ 170-199 (e.g. cellulose enzymes 173.120). A breaker may be included in a treatment fluid of the present invention in an amount and form sufficient to achieve the desired viscosity reduction at a desired time. The breaker may be formulated to provide a delayed break, if desired. For example, a suitable breaker may be encapsulated if desired. Suitable encapsulation methods are known to those skilled in the art. One suitable encapsulation method involves coating the selected breaker in a porous material that allows for release of the breaker at a controlled rate. Another suitable encapsulation method that may be used involves coating the chosen breakers with a material that will degrade when downhole so as to release the breaker when desired. Resins that may be suitable include, but are not limited to, polymeric materials that will degrade when downhole.

In certain embodiments of the present invention, the breakers may be encapsulated by synthetic and natural waxes. Waxes having different melting points may be used in order to control the delay of breaking based on the temperature of a specific subterranean operation. In an embodiment, the encapsulation of the breaker is performed by mixing the breaker and wax above the melting temperature for the specific wax and then extruding the composition to form small particles of the encapsulated material. The resulting product may be annealed by briefly heating the product to the point of melting the coating to seal cracks in the coating, thus preventing premature release. The encapsulation may also be achieved by melt spraying the wax on the breaker (e.g. citric acid) particles or by any other technique known by a person of ordinary skill in the art. If used, a breaker should be included in a treatment fluid of the present invention in an amount sufficient to facilitate the desired reduction in viscosity in a treatment fluid. For instance, peroxide concentrations that may be used vary from about 0.1 (0.4 liters) to about 30 gallons (113.6 liters) of peroxide per 1000 gallons (3785.4 litres) of the treatment fluid. Similarly, for instance, when citric acid is used as a breaker, concentrations of from 0.1 lb/Mgal (0.012 kg/m³) to 30 lb/Mgal (3.6 kg/m³) are appropriate.

In certain embodiments of the present invention, it may be desirable to use a compliant dual-functional additive that acts as a fluid loss control agent and a viscosity reducing agent for the treatment fluids. Such dual-functional additives provide both fluid loss control and the ability to break the viscosity of the treatment fluid in which they are used over time. The self-degrading fluid loss control properties and the delayed-release breaking properties may lead to better conductivity in the treated portion of the subterranean formation. In certain embodiments, these dual-functional additives may reduce or eliminate the need for separate, multiple additives to provide fluid loss control and viscosity break. Moreover, such dual-functional additives exhibit self-degrading properties whereby they may form a self-degrading filter cake that both reduces fluid loss and eliminates the need for a secondary solution to dissolve a filter cake after a subterranean operation is complete. Compliant dual-functional additives may also eliminate the need for costly procedures needed to dispose of the treatment fluids containing non-compliant additives and may help reduce negative impacts on the marine environment and groundwater. Additionally, compliant dual-functional additives may provide effective treatment of the formation without excessive damage caused by the use of multiple or non-compliant additives.

The compliant dual-functional additives suitable for use in the present invention may comprise any substance initially capable of preventing fluid loss of the treatment fluids by obstructing pore throats in the subterranean formation and subsequently capable of decreasing the viscosity of the treatment fluids through a double reaction mechanism. In certain embodiments, the dual-functional agent may comprise compounds that include any compliant ester capable of preventing fluid loss and breaking the viscous fluid in a controlled manner after well treatment is completed. An ester compound is defined as a compound that includes one or more carboxylate groups: R₁--COO-R₂, wherein R₁ can be H and wherein R₁ and R₂ may be phenyl, methoxyphenyl, alkylphenyl, C₁ -C₁₁ alkyl, C₁ -C₁₁ substituted alkyl, substituted phenyl, or other organic compound. Suitable esters include, but are not limited to, diesters, triesters, etc. Generally, suitable compliant dual-functional additives are immiscible in the treatment fluids and yet are capable of hydrolyzing over time in the presence of the water in the treatment fluid. Examples of suitable compliant esters include, but are not limited to, ethyl formate, propyl formate, butyl formate, amyl formate, anisyl formate, methyl acetate, propyl acetate, triacetin, butyl propionate, isoamyl propionate, ethyl lactate, methyl butyrate, ethyl isobutyrate, butyl isobutyrate, diethyl malonate, butyl ethyl malonate, dimethyl succinate, diethyl succinate, diethyl malate, diethyl tartrate, dimethyl tartrate, triethyl citrate, and any combination thereof. Suitable esters may include either substituted or unsubstituted alkyl groups.

In certain embodiments, a suitable dual-functional additive is an ester compound that degrades to form an acid thereby allowing the acid to act as a viscosity reducing agent for the treatment fluid. Suitable acids for use in the present invention include any compliant acid into which the compliant esters may degrade. Examples of such acids include, but are not limited to, formic acid, acetic acid, propionic acid, lactic acid, butyric acid, isobutyric acid, malonic acid, succinic acid, malic acid, tartaric acid, citric acid, and any combination thereof.

Without being limited by theory, it is believed that in suitable dual-functional additives provide fluid-loss control until the esters degrade into water-soluble components that subsequently break the viscosity of the treatment fluids through a double reaction mechanism, which may include both a hydrolysis reaction and a chelation reaction. By way of example, the dual-functional additive may catalyze hydrolysis of portions of the polymer backbone, and chelate crosslinking metal species that may be present; thereby reducing the viscosity. The combination of a degradable fluid-loss control agent and a delayed breaker may result in very low permeability damage and high conductivity once the reaction is complete. In certain embodiments, the hydrolysis of the compliant dual-functional additives is dependent on the pH range of the treatment fluid and the solubility of the ester. In certain embodiments, the alkyl group of the ester that comes from the corresponding alcohol may control the solubility properties of the ester. By way of example, one skilled in the art will recognize that esters made from low carbon number alcohols, such as methanol and ethanol, generally have relatively higher water solubility. Thus, application temperature range for these esters may be lower than higher carbon atom esters. For higher temperature applications, esters formed from higher carbon number alcohols, such as n-propanol, butanol, hexanol, and cyclohexanol, may be more suitable. In other embodiments, esters formed from polycarboxylic acids may be well suited for use in high temperature applications. In certain embodiments, mixed esters with both high and low carbon numbers, may be used for high temperature applications (for example, 275°F (135 °C) or above when using triethyl citrate) to achieve a more rapid viscosity break in the treatment fluids. Mixed esters may also be beneficial for moderate temperature applications (for example, 275°F (135 °C) or below when using triethyl citrate). For example, combining a formate ester with triethyl citrate will increase the rate of hydrolysis of the triethyl citrate in a pH range from about 3.5 to about 5. In those embodiments, combining both formate and acetate esters may lead to a faster break in the viscosity of the treatment fluid. One of ordinary skill in the art, with the benefit of this disclosure, will recognize the appropriate ester or combination of esters to include in a treatment fluid of the present invention based on, among other things, the temperature conditions of a particular application, the type of viscosifying agents used, the molecular weight of the viscosifying agents, the desired degree of viscosification, and the pH of the treatment fluid.

When used, a compliant dual-functional additive may be present in the treatment fluids useful in the methods of the present invention in an amount sufficient to provide at least a portion of the desired fluid loss control and breaker action. In other embodiments, it may be desirable to use a compliant dual-functional additive without using a substantial amount of another breaker. That is, to have at least about 75% to about 100% of the viscosity reduction be due to the use of the dual functional additive rather than to the use of an additional breaker. In some embodiments of the present invention, the treatment fluids may comprise fluid loss control additives known in the art (such as high molecular weight polymers) in addition to the dual functional additives described herein. However, in other embodiments, it may be desirable to use a compliant dual-functional additive without using a substantial amount of another fluid loss control additive. That is, to have at least about 75% to about 100% of the fluid loss control be due to the use of the dual functional additive rather than to the use of an additional fluid loss control additive. In other embodiments, it may be desirable to use a compliant dual-functional additive without using a substantial amount of another fluid loss control additive or a substantially amount of another breaker. That is, to have at least about 75% to about 100% of the fluid loss control and 75-100% of the viscosity reduction be due to the use of the dual functional additive rather than to the use of an additional fluid loss control additive or breaker. In some embodiments, the dual-functional additives may be present in an amount in the range of from about 0.03% to about 3% by weight of the treatment fluid. In other embodiment, the dual-functional additives may be present in an amount in the range of from about 0.1% to about 1% by weight of the treatment fluid. When the selected dual-functional additive is in a liquid form, it is preferably dispersed into the aqueous base fluid such that it forms "particles" or "beads" of dual-functional additive within the continuous phase of the aqueous base fluid. It is within the ability of one skilled in the art to disperse a selected dual-functional additive liquid into the aqueous base fluid.

A treatment fluid of the present invention may optionally comprise an activator or a retarder to, among other things, optimize the break rate provided by the breaker. Any known activator or retarder that is compatible with the particular breaker used is suitable for use in the present invention. Examples of such suitable activators include, but are not limited to, acid generating materials, chelated iron, copper, cobalt, and reducing sugars. Examples of suitable retarders include sodium thiosulfate, methanol, and diethylenetriamine. In some embodiments, the sodium thiosulfate may be used in a range of from about 1 to about 100 lb/Mgal (0.12 to 12.0kg/m³) of treatment fluid. Note, as used herein, "pounds per thousand gallons" may be expressed as "lb/Mgal" or "pptg." A preferred range may be from about 5 to about 20 Ib/Mgal (0.6 to 2.4 kg/m³). An artisan of ordinary skill with the benefit of this disclosure will be able to identify a suitable activator or retarder and the proper concentration of such activator or retarder for a given application.

The treatment fluids of the present invention also may comprise suitable fluid loss control agents. Such fluid loss control agents may be particularly useful when a treatment fluid of the present invention is being used in a fracturing application or in a fluid used to seal a formation from invasion of fluid from the well bore. Any fluid loss control agent that is compatible with the treatment fluids of the present invention is suitable for use in the present invention. Examples include, but are not limited to, starches, silica flour, gas bubbles (energized fluid or foam), benzoic acid, soaps, resin particulates, relative permeability modifiers, degradable gel particulates, and other immiscible fluids. It is also known in the art to use a dispersion of diesel in fluid as a fluid loss control agent; however, its use may have negative environmental impacts. Alternatively other water-immiscible solvents that have better environmental impact such as esters (e.g., triethyl citrate, ethyl formate, triethyl orthoformate amyl formate, diethyl malate, etc.) can be used as fluid loss liquids. These materials generate acid upon hydrolysis that helps in breaking the gel. In some cases, like triethyl citrate, the material generates citric acid that chelates with crosslinking metal ion in the fluid and break the fluid by taking away the metal crosslinker. A variety of organic acids are available in the form of esters that are compliant. Most of these are described as Synthetic Flavoring Substances and Adjuvants (21 CFR § 172.515). Another example of a suitable fluid loss control additive is one that comprises a degradable material. If included, a fluid loss additive should be added to a treatment fluid of the present invention in an amount necessary to give the desired fluid loss control. In some embodiments, a fluid loss additive may be included in an amount of about 5 to about 2000 Ib/Mgal (0.6 to 240 kg/m³) of the treatment fluid. In some embodiments, the fluid loss additive may be included in an amount from about 10 to about 50 Ib/Mgal (1.2 to 6.0 kg/m³) of the treatment fluid. For some liquid additives that function as fluid loss additives, these may be included in an amount from about 0.01% to about 20% by volume; in some embodiments, these may be included in an amount from about 1.0% to about 10% by volume.

The treatment fluids of the present invention may comprise particulates, such as proppant particulates or gravel particulates. Such particulates may be included in the treatment fluids of the present invention, for example, when a gravel pack is to be formed in at least a portion of the well bore or a proppant pack is to be formed in one or more fractures in the subterranean formation. Particulates suitable for use in the present invention may comprise any material suitable for use in subterranean operations. Suitable materials for these particulates may include, but are not limited to, sand, bauxite, ceramic materials, glass materials, polymer materials, polytetrafluoroethylene (TEFLON®) materials, nut shell pieces, cured resinous particulates comprising nut shell pieces, seed shell pieces, cured resinous particulates comprising seed shell pieces, fruit pit pieces, cured resinous particulates comprising fruit pit pieces, wood, composite particulates, and combinations thereof. Suitable composite particulates may comprise a binder and a filler material wherein suitable filler materials include silica, alumina, fumed carbon, carbon black, graphite, mica, titanium dioxide, meta-silicate, calcium silicate, kaolin, talc, zirconia, boron, fly ash, hollow glass microspheres, solid glass, and combinations thereof. The mean particulate size generally may range from about 2 mesh (6.7 mm) to about 400 mesh (0.038 mm) on the U.S. Sieve Series; however, in certain circumstances, other mean particulate sizes may be desired and will be entirely suitable for practice of the present invention. In particular embodiments, preferred mean particulate size distribution ranges are one or more of 6/12 (3.35/1.70 mm), 8/16 (2.36/.1.18 mm), 12/20 (1.70/0.850 mm), 16/30 (1.18/0.600mm), 20/40 (0.850/0.425 mm), 30/50 (0.600/0.300 mm), 40/60 (0.425/0.250 mm), 40/70 (0.425/0.212 mm), or 50/70 mesh (0.300/0.212 mm). It should be understood that the term "particulate," as used in this disclosure, includes all known shapes of materials, including substantially spherical materials, fibrous materials, polygonal materials (such as cubic materials), and mixtures thereof. Moreover, fibrous materials, that may or may not be used to bear the pressure of a closed fracture, may be included in certain embodiments of the present invention. In certain embodiments, the particulates included in the treatment fluids of the present invention may be coated with any suitable resin or tackifying agent known to those of ordinary skill in the art. In certain embodiments, the particulates may be present in the treatment fluids of the present invention in an amount in the range of from about 0.5 pounds per gallon (60 kg/m³) ("ppg") to about 30 ppg (3600 kg/m³) by volume of the treatment fluid.

A biocide may be included to the treatment fluids of the present invention to reduce bioburden of the fluid so as to avoid introducing an undesirable level of bacteria into the subterranean formation. Suitable examples of biocides may include both oxidizing biocides and nonoxidizing biocides. Examples of oxidizing biocides include, but are not limited to, sodium hypochlorite, hypochlorous acid, chlorine, bromine, chlorine dioxide, and hydrogen peroxide. Examples of nonoxidizing biocides include, but are not limited to, aldehydes, quaternary amines, isothiazolines, carbamates, phosphonium quaternary compounds, and halogenated compounds. Factors that determine what biocide will be used in a particular application may include, but are not limited to, cost, performance, compatibility with other components of the treatment fluid, kill time, and environmental compatibility. One skilled in the art with the benefit of this disclosure will be able to choose a suitable biocide for a particular application.

In some embodiments, UV radiation may be used to reduce the bioburden of a fluid in place of chemical biocides or used in conjunction with chemical biocides. One method of using UV light to reduce bioburden suitable for use in the present invention involves adding a photoinitiator to the treatment fluid and then exposing the treatment fluid to a UV light source. Such photoinitiators may absorb the UV light and undergo a reaction to produce a reactive species of free radicals that may in turn trigger or catalyze desired chemical reactions. Suitable organic photoinitiators for use in the present invention may include, but are not limited to, acetophenone, propiophenone, benzophenone, xanthone, thioxanthone, fluorenone, benzaldehyde, anthraquinone, carbazole, thioindigoid dyes, phosphine oxides, ketones, benzoin ethers, benzyl ketals, alpha-dialkoxyacetophenones, alpha-hydroxyalkylphenones, alpha-aminoalkylphenones, and acylphosphine oxides; any combination thereof. Suitable inorganic photoinitiators for use in the present invention are substances that, when exposed to UV light, will generate free radicals that will interact with the microorganisms as well as other organics in a given treatment fluid. Some suitable inorganic photoinitiators include, but are not limited to, nanosized metal oxides (e.g., those that have at least one dimension that is 1 nm to 1000 nm in size) such as titanium dioxide, iron oxide, cobalt oxide, chromium oxide, magnesium oxide, aluminum oxide, copper oxide, zinc oxide, manganese oxide, and any combination thereof.

Salts may optionally be included in the treatment fluids of the present invention for many purposes, including, for reasons related to compatibility of the treatment fluid with the formation and formation fluids. To determine whether a salt may be beneficially used for compatibility purposes, a compatibility test may be performed to identify potential compatibility problems. From such tests, one of ordinary skill in the art with the benefit of this disclosure will be able to determine whether a salt should be included in a treatment fluid of the present invention. Suitable salts include, but are not limited to, calcium chloride, sodium chloride, magnesium chloride, potassium chloride, sodium bromide, potassium bromide, ammonium chloride, sodium formate, potassium formate, cesium formate, mixtures thereof, and the like. The amount of salt that should be added should be the amount necessary for formation compatibility, such as stability of clay minerals, taking into consideration the crystallization temperature of the brine, e.g., the temperature at which the salt precipitates from the brine as the temperature drops.

Examples of suitable pH control additives that may optionally be included in the treatment fluids of the present invention are bases and/or acid compositions. A pH control additive may be necessary to maintain the pH of the treatment fluid at a desired level, *e.g.,* to improve the effectiveness of certain breakers and to reduce corrosion on any metal present in the well bore or formation, etc. One of ordinary skill in the art with the benefit of this disclosure will be able to recognize a suitable pH for a particular application.

The pH control additive also may comprise a base to elevate the pH of the treatment fluid. Generally, a base may be used to elevate the pH of the mixture. Any known base that is compatible with the viscosifying agents of the present invention can be used in the treatment fluids of the present invention. Examples of suitable bases include, but are not limited to, sodium hydroxide, potassium carbonate, potassium hydroxide, sodium carbonate, and sodium bicarbonate. One of ordinary skill in the art with the benefit of this disclosure will recognize the suitable bases that may be used to achieve a desired pH elevation.

In some embodiments, the treatment fluids of the present invention may include surfactants, e.g., to improve the compatibility of the treatment fluids of the present invention with other fluids (like any formation fluids) that may be present in the well bore. One of ordinary skill in the art with the benefit of this disclosure will be able to identify the type of surfactant as well as the appropriate concentration of surfactant to be used. Suitable surfactants may be used in a liquid or powder form. Where used, the surfactants may be present in the treatment fluid in an amount sufficient to prevent incompatibility with formation fluids, other treatment fluids, or well bore fluids. In an embodiment where liquid surfactants are used, the surfactants are generally present in an amount in the range of from about 0.01% to about 5.0% by volume of the treatment fluid. In one embodiment, the liquid surfactants are present in an amount in the range of from about 0.1% to about 2.0% by volume of the treatment fluid. In embodiments where powdered surfactants are used, the surfactants may be present in an amount in the range of from about 0.001% to about 3.0% by weight of the treatment fluid.

In some embodiments, the surfactant may be a viscoelastic surfactant. These viscoelastic surfactants may be cationic, anionic, nonionic, amphoteric, or zwitterionic in nature. The viscoelastic surfactants may comprise any number of different compounds, including methyl ester sulfonates (*e.g*., as described in U.S. Patent Application Nos. 2006/0180310, 2006/0180309, 2006/0183646 and U.S. Pat. No. 7,159,659, hydrolyzed keratin (e.g., as described in U.S. Pat. No. 6,547,871), sulfosuccinates, taurates, amine oxides, ethoxylated amides, alkoxylated fatty acids, alkoxylated alcohols (e.g., lauryl alcohol ethoxylate, ethoxylated nonyl phenol), ethoxylated fatty amines, ethoxylated alkyl amines (e.g., cocoalkylamine ethoxylate), betaines, modified betaines, alkylamidobetaines *(e.g.,* cocoamidopropyl betaine), quaternary ammonium compounds (*e.g.,* trimethyltallowammonium chloride, trimethylcocoammonium chloride), derivatives thereof, and combinations thereof. In certain embodiments, the surfactant may comprise a compliant surfactant such as sodium lauryl sulfate, polyoxyethylene (20) sorbitan monolaurate (commonly known as Polysorbate 20 or Tween 20), polysorbate 60 polysorbate 65, polysorbate 80, or sorbitan monostearate.

It should be noted that, in some embodiments, it may be beneficial to add a surfactant to a treatment fluid of the present invention as that fluid is being pumped downhole to help eliminate the possibility of foaming. However, in those embodiments where it is desirable to foam the treatment fluids of the present invention, surfactants such as HY-CLEAN (HC-2) surface-active suspending agent or AQF-2 additive, both commercially available from Halliburton Energy Services, Inc., of Duncan, Oklahoma, may be used. Additional examples of foaming agents that may be utilized to foam and stabilize the treatment fluids of this invention include, but are not limited to, betaines, amine oxides, methyl ester sulfonates, alkylamidobetaines such as cocoamidopropyl betaine, alpha-olefin sulfonate, trimethyltallowammonium chloride, C₈ to C₂₂ alkylethoxylate sulfate and trimethylcocoammonium chloride. Other suitable foaming agents and foam stabilizing agents may be included as well, which will be known to those skilled in the art with the benefit of this disclosure.

The methods and treatment fluids of the present invention may be used during or in preparation for any subterranean operation wherein a fluid may be used. Suitable subterranean operations may include, but are not limited to, drilling operations, fracturing operations, sand control treatments *(e.g.,* gravel packing), acidizing treatments *(e.g.,* matrix acidizing, fracture acidizing, removal of filter cakes and fluid loss pills), "frac-pack" treatments, well bore clean-out treatments, and other suitable operations where a treatment fluid of the present invention may be useful. One of ordinary skill in the art, with the benefit of the present disclosure, will recognize suitable operations in which the treatment fluids of the present invention may be used.

In certain embodiments, the present invention provides methods that include a method comprising: providing a fracturing fluid comprising an aqueous base fluid, a compliant viscosifying agent, and a compliant crosslinking agent that comprises an iron ion and an aluminum ion; and introducing the fracturing fluid into at least a portion of a subterranean formation at a rate and pressure sufficient to create or enhance at least one or more fractures in the subterranean formation. In these embodiments, a treatment fluid of the present invention may be pumped into a well bore that penetrates a subterranean formation at a sufficient hydraulic pressure to create or enhance one or more cracks, or "fractures," in the subterranean formation. "Enhancing" one or more fractures in a subterranean formation, as that term is used herein, is defined to include the extension or enlargement of one or more natural or previously created fractures in the subterranean formation. The treatment fluids of the present invention used in these embodiments optionally may comprise particulates, often referred to as "proppant particulates," that may be deposited in the fractures. The proppant particulates may function, among other things, to prevent one or more of the fractures from fully closing upon the release of hydraulic pressure, forming conductive channels through which fluids may flow to the well bore. Once at least one fracture is created and the proppant particulates are substantially in place, the viscosity of the treatment fluid of the present invention may be reduced (e.g., using a gel breaker, or allowed to reduce naturally over time) to allow it to be recovered.

In certain embodiments, the treatment fluids of the present invention may be used in acidizing and/or acid fracturing operations. In these embodiments, a portion of the subterranean formation is contacted with a treatment fluid of the present invention comprising one or more organic acids (or salts thereof) and one or more inorganic acids (or salts thereof), which interact with subterranean formation to form "voids" (e.g., cracks, fractures, wormholes, etc.) in the formation. After acidization is completed, the treatment fluid of the present invention (or some portion thereof) may be recovered to the surface. The remaining voids in the subterranean formation may, among other things, enhance the formation's permeability, and/or increase the rate at which fluids subsequently may be produced from the formation. In certain embodiments, a treatment fluid of the present invention may be introduced into the subterranean formation at or above a pressure sufficient to create or enhance one or more fractures within the subterranean formation. In other embodiments, a treatment fluid of the present invention may be introduced into the subterranean formation below a pressure sufficient to create or enhance one or more fractures within the subterranean formation.

To facilitate a better understanding of the present invention, the following examples of the preferred embodiments are given. In no way should the following examples be read to limit, or define, the scope of the invention.

### EXAMPLES

The following examples are submitted for the purpose of demonstrating the performance characteristics of the treatment fluids of the present invention.

For Examples 1-3, treatment fluids were prepared and their viscosities were measured. For treatment fluids expressed as containing "XX" lb/Mgal of a polysaccharide or starch, they were prepared by adding an appropriate amount of the product to 100 mL of deionized water in a blender at low speed and left to hydrate for 30 minutes to form a hydrated base gel. Of course, the amount and type of gelling agent added varied according to the final concentration and type of base gel desired. Once the base gel was hydrated, 1 g of KCl was added either in solid form or by dissolving in a minimum amount of water. The base gel was then mixed to distribute the KCl throughout the mixture. Next, where used, an appropriate amount of crosslinking agent was added to the base gel followed by appropriate amount of breaker when desired. The viscosity of the samples was measured using a Chandler 5550 viscometer with a B5X Bob at shear rate of 40 sec⁻¹. In each case, a 44 mL sample of gelled fluid was transferred to the viscometer cup at 75°F (24 °C) and placed on the viscometer.

### Comparative Example 1 - Thermal stability of the viscosity of starch/polysaccharide fluids.

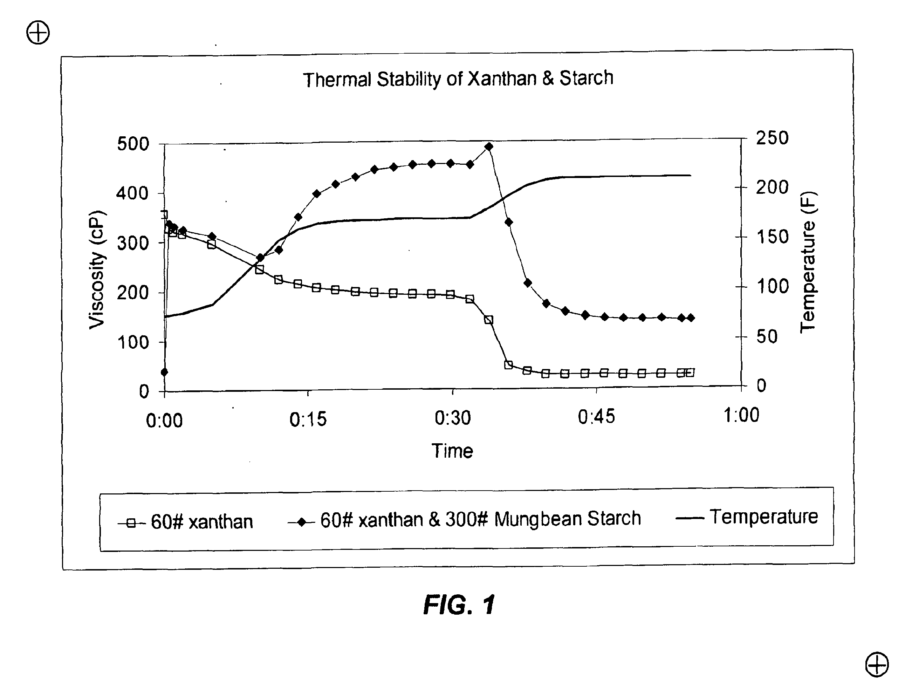

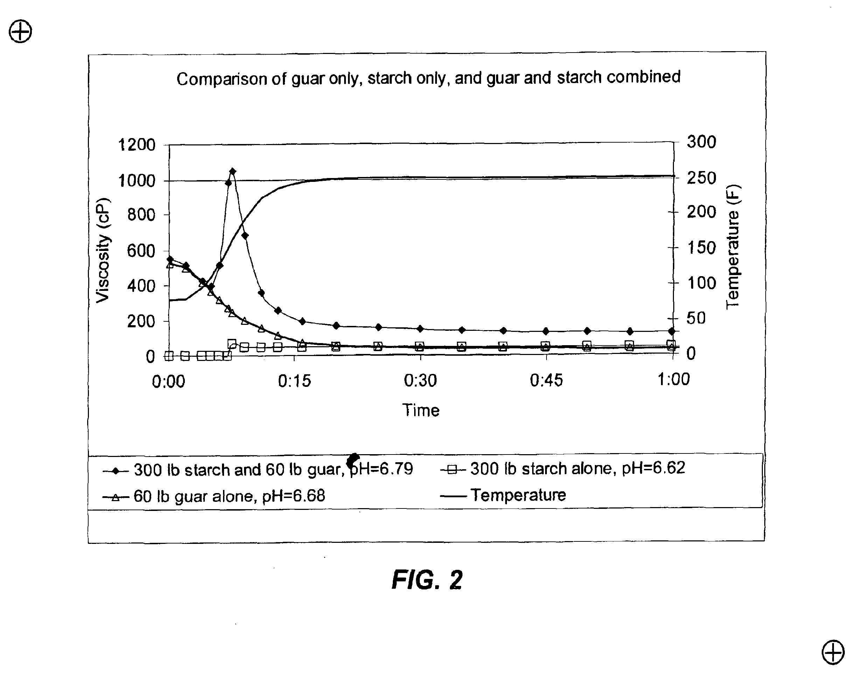

Figure 1 illustrates the change in viscosity of 60 lb/Mgal (7.2 kg/m³) of WG-37 (xanthan) over time as a function of relatively low temperature and the change in viscosity of the same fluid with 300 Ib/Mgal (35.9 kg/m³) starch also added. Figure 2 shows the same fluids tested at higher temperatures. As can be seen, the xanthan-only fluid dropped to about 200 cp at 180°F (82 °C), while the viscosity of mix system of 60 lb/Mgal (7.2 kg/m³) WG-37 and 300 Ib/Mgal (35.9 kg/m³) starch reached to nearly 460 cp at 180°F (82 °C) after the hydration of starch triggered at temperature around 130°F (54 °C). However, the viscosity dropped dramatically when the temperature reached about 225°F (107 °C). Figure 2 shows the viscosity profile of a 60 Ib/Mgal (7.2kg/m³) guar gel, a 300 lb/Mgal (35.9 kg/m³) cornstarch gel, and a gel containing both 60 Ib/Mgal (7.2 kg/m³) guar and 300 Ib/Mgal (35.9 kg/m³) cornstarch, each at a pH of about 6.7. As can be seen in Figures 1 and 2, the combined cornstarch/guar gel exhibits the synergistic effect of the gel mixture through a viscosity profile that is different that each individual component alone.

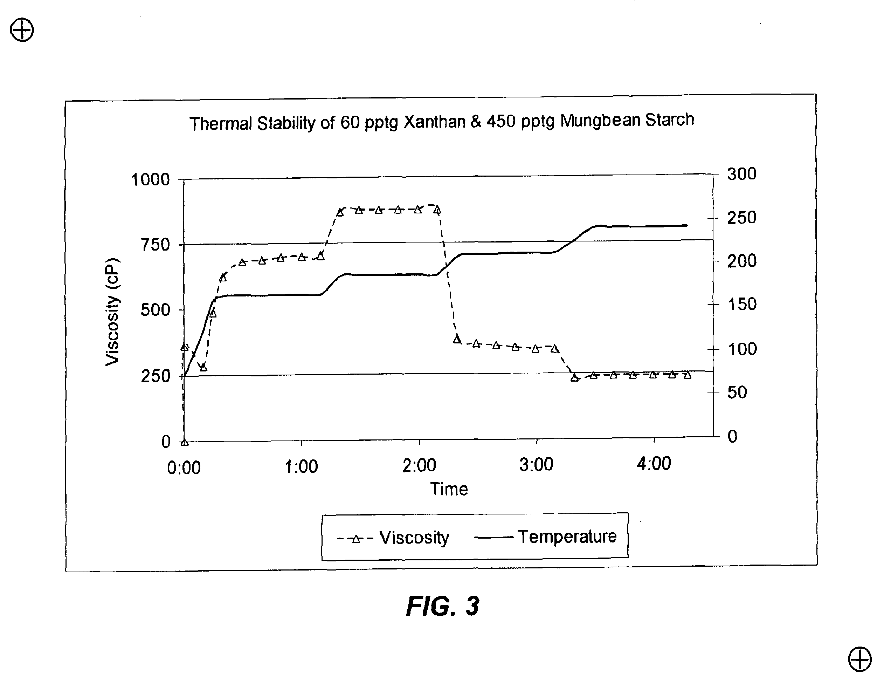

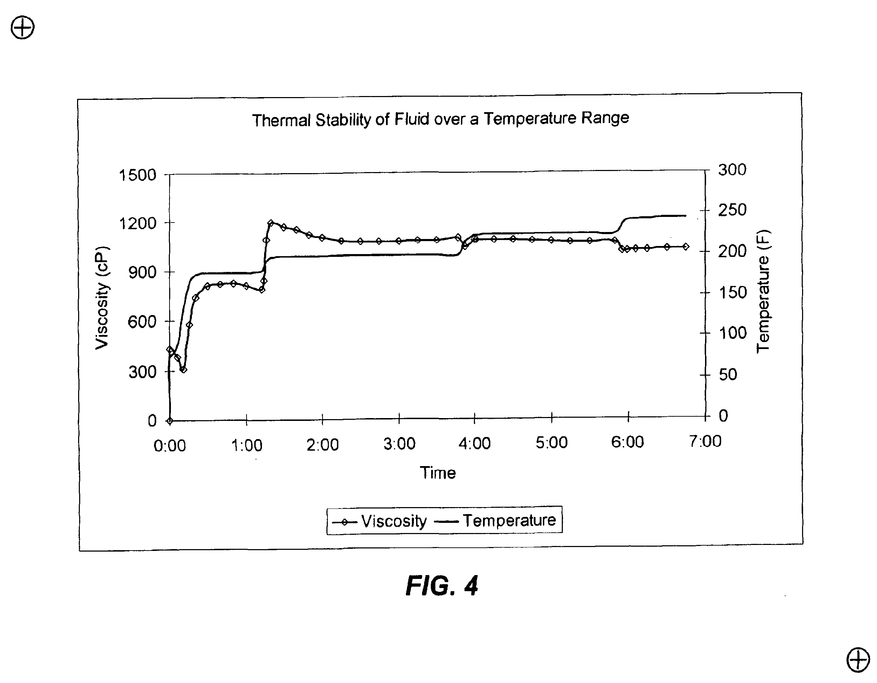

Next, 450 Ib/Mgal (53.9 kg/m³) starch and 60 Ib/Mgal (7.2 kg/m³) xanthan gum was combined and the viscosity of the system increased to about 900 cP at temperature 200°F (93°C). However, as can be seen in Figure 3, the fluid experiencing thinning similar to the 300 Ib/Mgal (35.9 kg/m³) fluid at about 225°F (107 °C). While all of Figures 1-3 show that treatment fluid samples containing both a polysaccharide gelling agent and a starch show a synergistic effect of the mixture as opposed to viscosity profiles of the individual components alone. In addition, as seen in Figure 4, guar provided better suspension ability at higher temperatures for starch than did xanthan with a fluid of having 60 lb/Mgal (7.2 kg/m³) of guar gum and 450 Ib/Mgal (53.9 kg/m³), showing relatively high viscosity even at temperature around 250°F (121 °C).

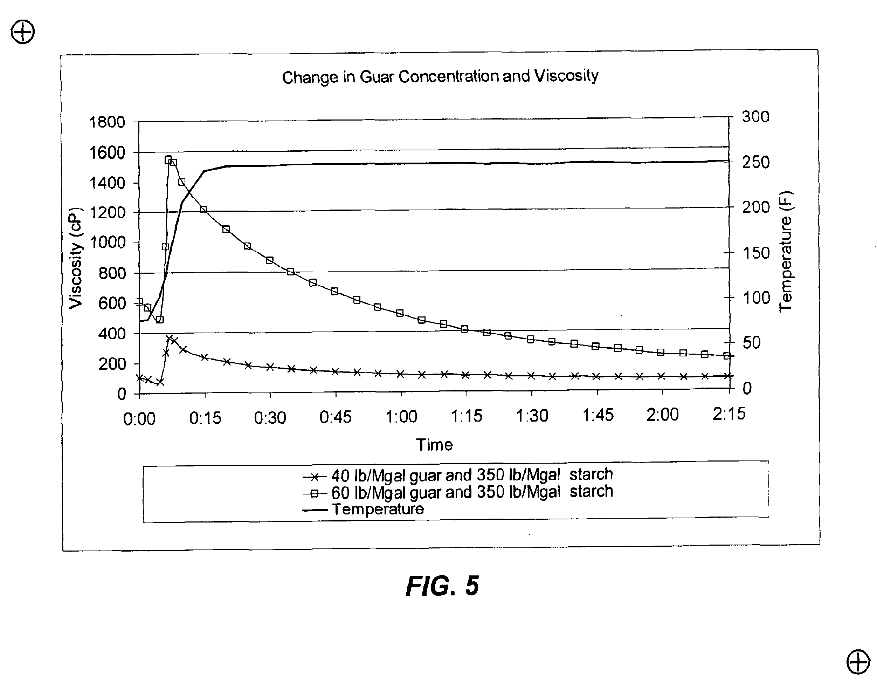

Next, the effect on viscosity was tested in fluids having a constant level of starch and a changing level of polysaccharide. Two fluids were tested, the first comprising 40 lb/Mgal (4.8 kg/m³) guar and 350 Ib/Mgal (41.9 kg/m³) of starch and the second comprising 60 lb/Mgal (7.2 kg/m³) guar and 350 lb/Mgal (41.9 kg/m³) of starch. As can be seen from Figure 5, an increase in the guar concentration caused an increase in viscosity and was better able to maintain a higher viscosity under temperature.

### Comparative Example 2 - Effect of additives on viscosity of starch/polysaccharide fluids.

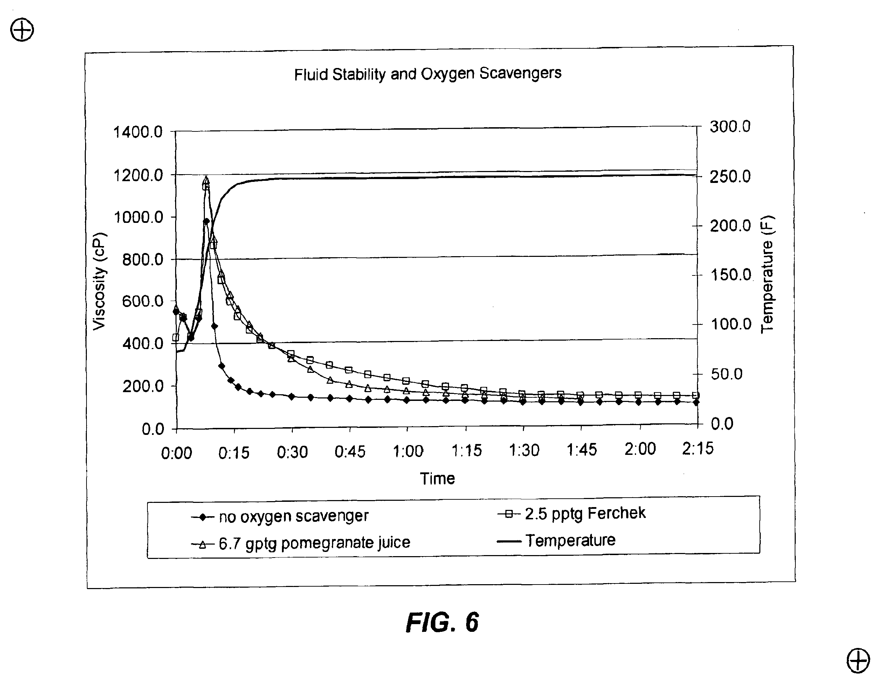

Next, the viscosity effect was tested by adding oxygen scavengers to the starch/polysaccharide fluids. Figure 6 demonstrates the enhancement in starch/polysaccharide gel stability that can be obtained with chemicals that scavenge the oxygen contained within the gel. Oxygen scavengers react with the available oxygen in the fluid, thereby prolonging the integrity of the chemical bonds that bonds the gel viscosity that might otherwise be negatively affected. The three fluids tested each contained 60 Ib/Mgal (7.2 kg/m³) guar and 325 Ib/Mgal (38.9 kg/m³) derivatized potato starch (WLC-4™ commercially available from Halliburton Energy Services of Duncan Oklahoma). One fluid additionally had 2.5 Ib/Mgal (0.3 kg/m³) FERCHEK ® (an oxygen scavenger and iron inhibitor commercially available from Halliburton Energy Services of Duncan, Oklahoma) and another fluid additionally had 6.5 gal/Mgal (0.8 kg/m³) pomegranate juice.

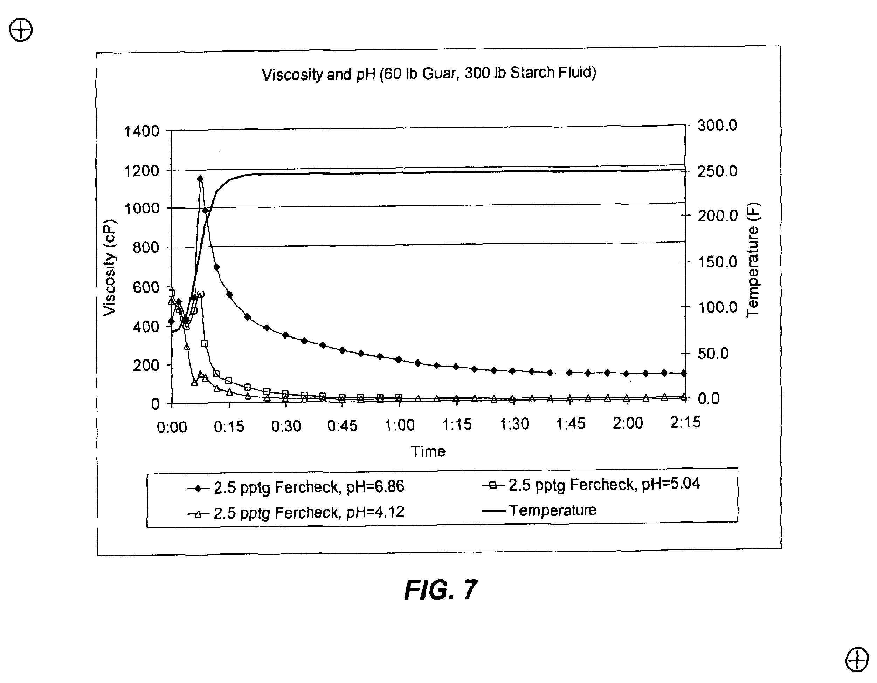

Next, the viscosity effect was tested using the FERCHEK ® oxygen scavenger at a variety of pH levels. The results are shown in Figure 7, and demonstrate that viscosity development is impaired and viscosity reduction is seen as the pH of the fluid is lowered; thus, reduction in pH is effective in breaking the tested starch/polysaccharide fluids. The three fluids tested each contained 60 lb/Mgal (7.2 kg/m³) guar and 325 Ib/Mgal (38.9 kg/m³) derivatized potato starch, and 2.5 lb/Mgal (0.3 kg/m³) FERCHEK ®. The fluids were tested at three pH levels: 6.86, 4.04, and 4.12.

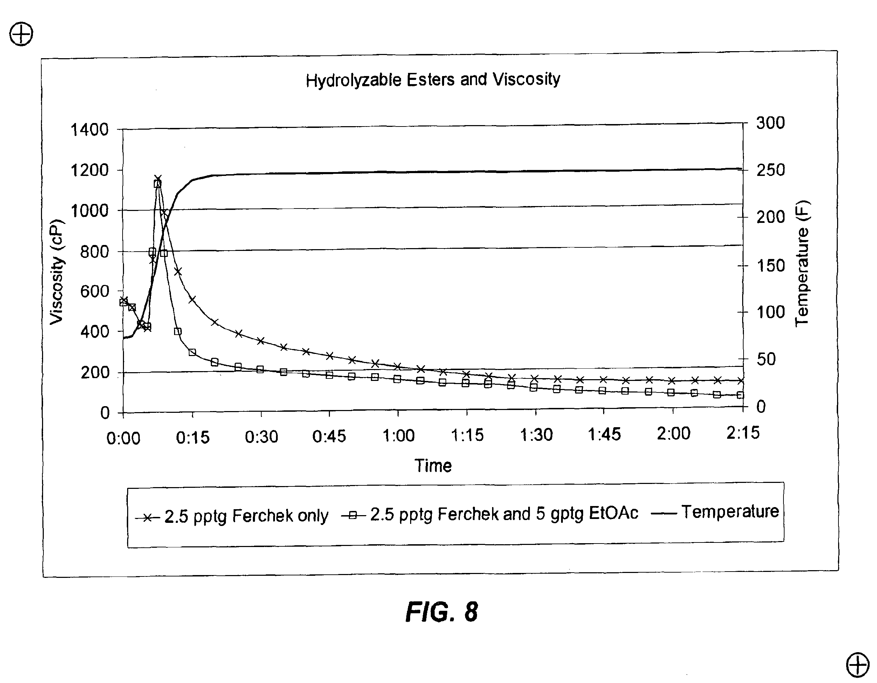

Next, the viscosity effect was tested using the FERCHEK ® oxygen scavenger and ethyl acetate, a chemical that has a hydrolyzable ester linkage known to provide a controllable viscosity reduction in some starch/polysaccharide gel mixtures. The ester provides a means in which a pH lowering effect can be made in the gel after the starch granules hydrate and swell. The results are shown in Figure 8, and demonstrate that a hydrolyzable ester can be used to allow for a controllable viscosity break in starch/polysaccharide fluids. The two fluids tested each contained 60 Ib/Mgal (7.2 kg/m³) guar and 325 lb/Mgal (38.9 kg/m³) derivatized potato starch, and 2.5 Ib/Mgal (0.3 kg/m³) FERCHEK ®. In addition, one of the fluids further contained 5 gal/Mgal (0.6 kg/m³) ethyl acetate (EtOAc).

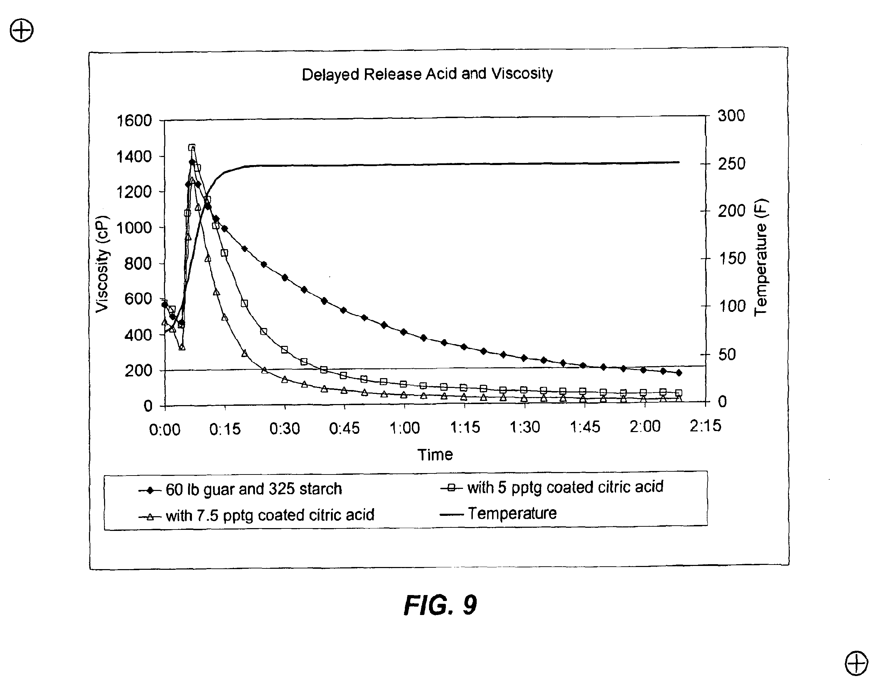

Next, the viscosity effect was tested using chemicals that have delayed-released acids to determine whether they would provide a controllable viscosity reduction in starch/polysaccharide gel mixtures. The delayed release acid used was lipid coated citric acid wherein the lipid coating becomes amorphous and then melts in the presence of increasing temperature, thereby releasing the acid. Three fluids were tested, each had 60 lb/Mgal (7.2 kg/m³) guar and 325 lb/Mgal (38.9 kg/m³) derivatized potato starch. One fluid additionally had 5 lb/Mgal (0.6 kg/m³) lipid coated citric acid and another fluid additionally had 7.5 Ib/Mgal (0.9 kg/m³) lipid coated citric acid. The results are shown in Figure 9, and demonstrate that a delayed release acid can use used to provide a controlled viscosity reduction in starch/polysaccharide fluids.

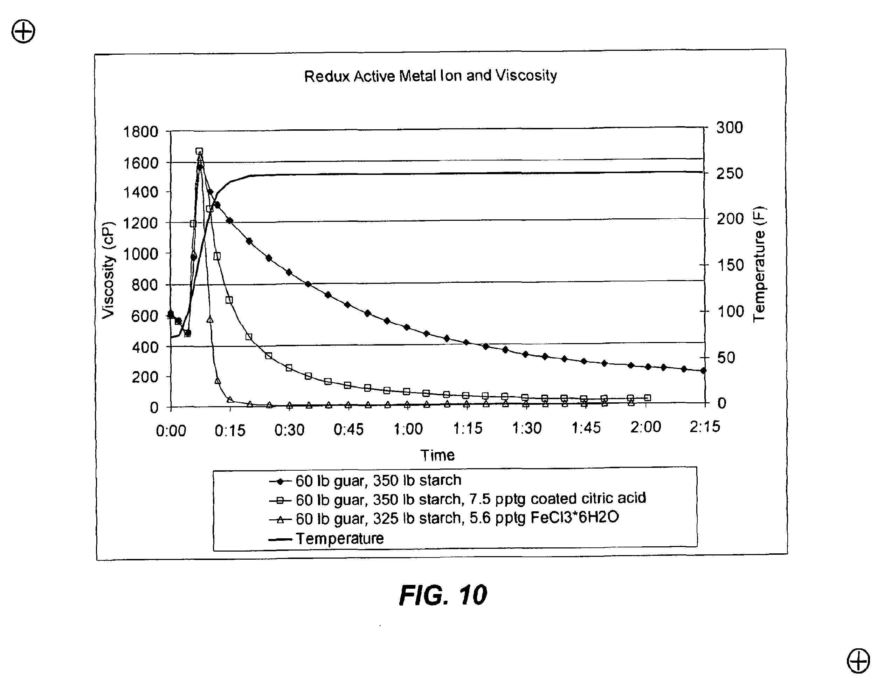

Next, the viscosity effect was tested using a redox active metal ion to provide a controllable viscosity reduction in starch/polysaccharide gel mixtures. The redox active metal ion used was ferric chloride hexahydrate; however, other redox active metals such as Mn, Cu, V, Co, Cr, etc. would be expected to give similar effects. Three fluids were tested, (1) 60 Ib/Mgal guar (7.2 kg/m³), 350 Ib/Mgal (41.9 kg/m³) derivatized potato starch; (2) 60 lb/Mgal guar (7.2 kg/m³), 350 lb/Mgal (41.9 kg/m³) derivatized starch and 7.5 Ib/Mgal (0.9 kg/m³) lipid coated citric acid; and (3) 60 Ib/Mgal guar (7.2 kg/m³), 325 lb/Mgal (38.9 kg/m³) derivatized starch and 5.6 lb/Mgal (0.7 kg/m³) ferric chloride hexahydrate (FeCl₃·6H₂O). The results are shown in Figure 10, and demonstrate that a redox active metal ion can use used to provide a controlled viscosity reduction in starch/polysaccharide fluids.

### Comparative Example 3 - Viscosity effects of starch/polysaccharide fluids.

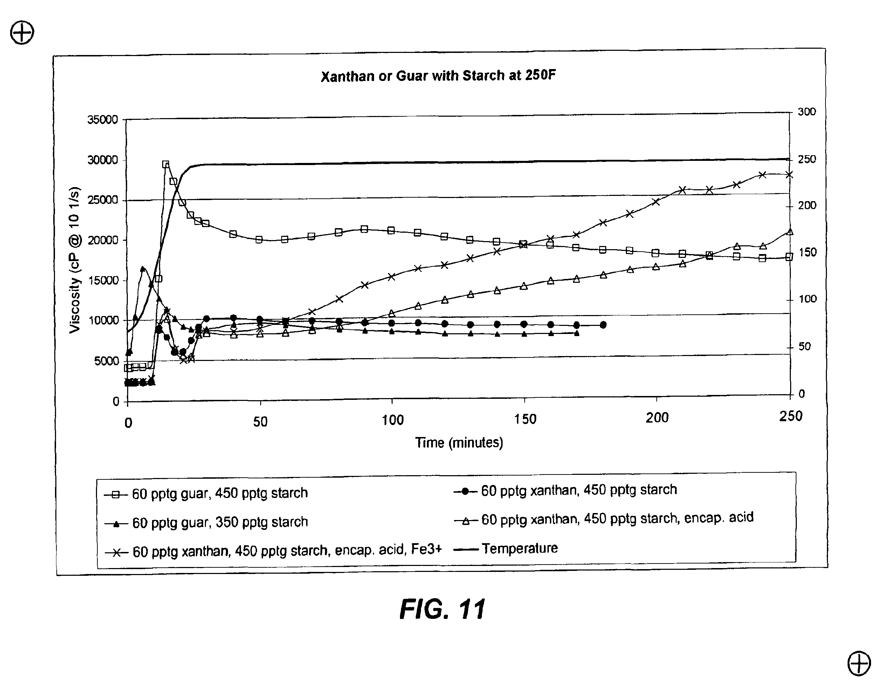

Next, the particulate transport ability (expressed as viscosity) of five starch/polysaccharide fluids was tested. Three fluids were tested, (1) 60 Ib/Mgal guar (7.2 kg/m³), (WG-36 commercially available from Halliburton Energy Services) and 450 ppt (53.9 kg/m³) derivatized potato starch; (2) 60 lb/Mgal (7.2 kg/m³), xanthan (CX-91, commercially available from Cargill Incorporated of Minneapolis, MN), 400 Ib/Mgal (47.9 kg/m³) derivatized potato starch, and 10 lb/Mgal (1.2 kg/m³) encapsulated citric acid; (3) 60 lb/Mgal (7.2 kg/m³), CX-91, 450 Ib/Mgal (53.9 kg/m³) derivatized potato starch, 10 Ib/Mgal (1.2 kg/m³) encapsulated citric acid, and 30 mg/L Fe³⁺; (4) 60 lb/Mgal (7.2 kg/m³), CX-91 and 450 Ib/Mgal (53.9 kg/m³) derivatized potato starch; (5) 60 lb/Mgal (7.2 kg/m³), guar gum and 350 lb/Mgal (41.9 kg/m³) derivatized potato starch. The results are shown in Figure 11, with higher viscosity equating to higher particulate carrying ability.

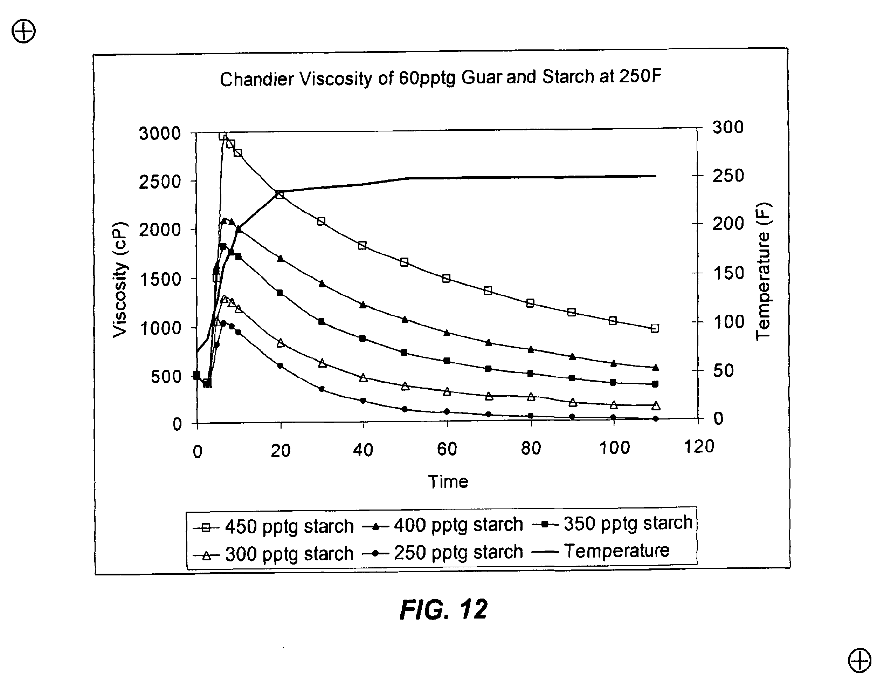

Next, the viscosity of a 60 lb (7.2 kg/m³), guar fluid was tested with increasing levels of starch. The results are shown in Figure 12 and show a steady increase in viscosity as the amount of starch was increased from 250 Ib/Mgal (30.0 kg/m³) to 450 lb/Mgal (53.9 kg/m³) in increments of 50 lb/Mgal (6.0 kg/m³).

For Examples 4-8, treatment fluids were prepared and their viscosities were measured. For treatment fluids expressed as containing XX lb/Mgal of a polysaccharide or starch, they were prepared by adding an appropriate amount of the product to 100 mL of Duncan, Oklahoma tap water in a blender at low speed and left to hydrate for 1 hour to form a hydrated base gel. Of course, the amount and type of gelling agent added varied according to the final concentration and type of base gel desired. Once the base gel was hydrated, 1g of KCl was added either in solid form or by dissolving in a minimum amount of water. The base gel was then mixed to distribute the KCl throughout the mixture. The viscosity of the samples was measured using a Chandler 5550 viscometer with a B5X Bob at shear rate of 40 sec⁻¹. In each case, a 44 mL sample of gelled fluid was transferred to the viscometer cup at 75°F (24 °C) and placed on the viscometer.

### Example 4 - Effect of an iron/aluminum crosslinker on a xanthan fluid.

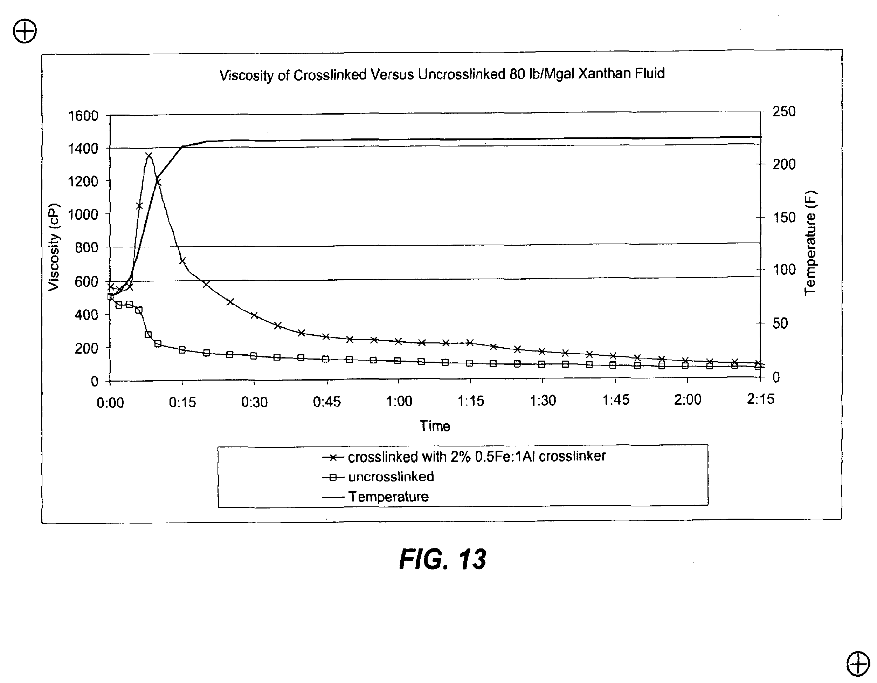

Initially the viscosity of an uncrosslinked xanthan fluid was compared as against a xanthan fluid crosslinked with an iron/aluminum (Fe/Al) crosslinker. The source of aluminum ions used was aluminum ammonium sulfate. In each case, the fluid was an 80 Ib/Mgal (9.6 kg/m³) xanthan fluid. For the crosslinked fluid, 2% of a crosslinker containing 0.5Fe:1Al:3Lac:3Lac:1AcO (0.254% Fe, 0.246% Al). The results are shown in Figure 13 and show that the crosslinked fluid showed consistently higher viscosity across the tested temperature range.

### Example 5 - Effect of pH on an iron/aluminum crosslinked xanthan fluid.

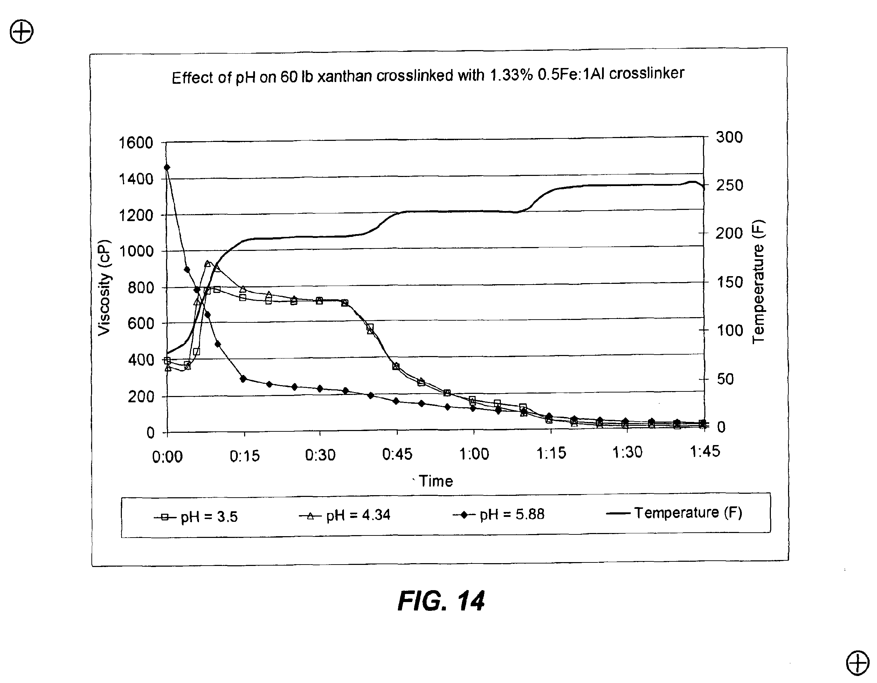

Next a fluid containing 60 Ib/Mgal (7.2 kg/m³) xanthan fluid and 1.33% of a crosslinker containing 0.5Fe:1Al:3Lac:1AcO (0.254% Fe, 0.246% Al) was prepared and its viscosity measured under three pH levels: 3.5, 4.34, and 5.88. The source of aluminum ions used was aluminum ammonium sulfate. Figure 14 demonstrates the optimal pH range in which the iron/aluminum crosslinker can be used to crosslink xanthan is between 3 pH to 4.8 pH.The fluid tested at 5.88 pH resulted in an instant, high viscosity gel that had no crosslink delay and degraded rapidly.

### Example 6 - Effect of iron concentration on an iron/aluminum crosslinked xanthan fluid.

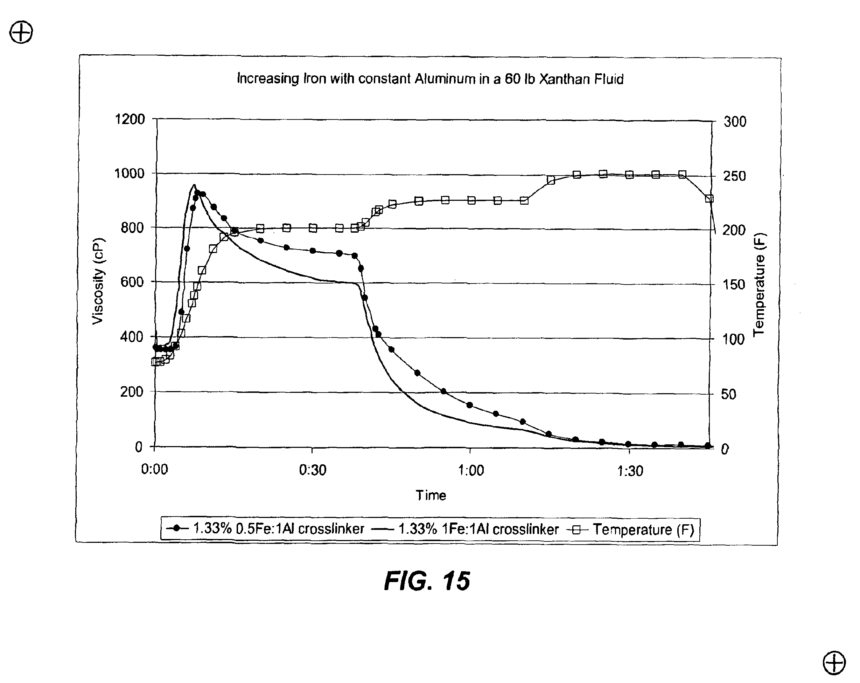

Next the viscosity of two examples of xanthan gels crosslinked with iron/aluminum crosslinkers was tested. The results indicate that increasing the iron concentration while keeping the aluminum concentration constant tends to reduce the gel viscosity faster. This may indicate that the iron ions are participating in the viscosity reduction. Tests have been performed that indicate that the iron ions may be participating in a redox reaction that is breaking the chemical bonds of the polymer. One can foresee that both Fe²⁺ and Fe³⁺ ions are generated in the redox reaction to break the bonds within the polymer. Additionally, the iron may be acting as a Lewis acid to catalyze acid hydrolysis of the acetal linkages in the xanthan. As the Fe³⁺ is reduced to Fe²⁺ in the oxidative breaking of the polysaccharide, the iron is no longer active as a crosslinker. Testing with Fe²⁺ salts (ferrous chloride and ferrous ammonium sulfate) did not produce crosslinked gels in contrast to Fe³⁺ salts (FeCl₃), which form strong, crosslinked gels under the same conditions. While the iron crosslinker is more easily dispersed in the gel and is less shear sensitive toward the lower end of the pH range (about pH 3), it results in a polymer that is less stable at temperature than a fluid with a higher pH. Thus, as seen in Figure 15, increasing the amount of iron while holding the amount of aluminum, lactate, and acetate constant appears to give a lower performance gel. The increase in iron may be contributing to a more shear insensitive gel in addition to faster gel degradation.

### Example 7 - Iron/aluminum crosslinkers versus aluminum only crosslinkers.

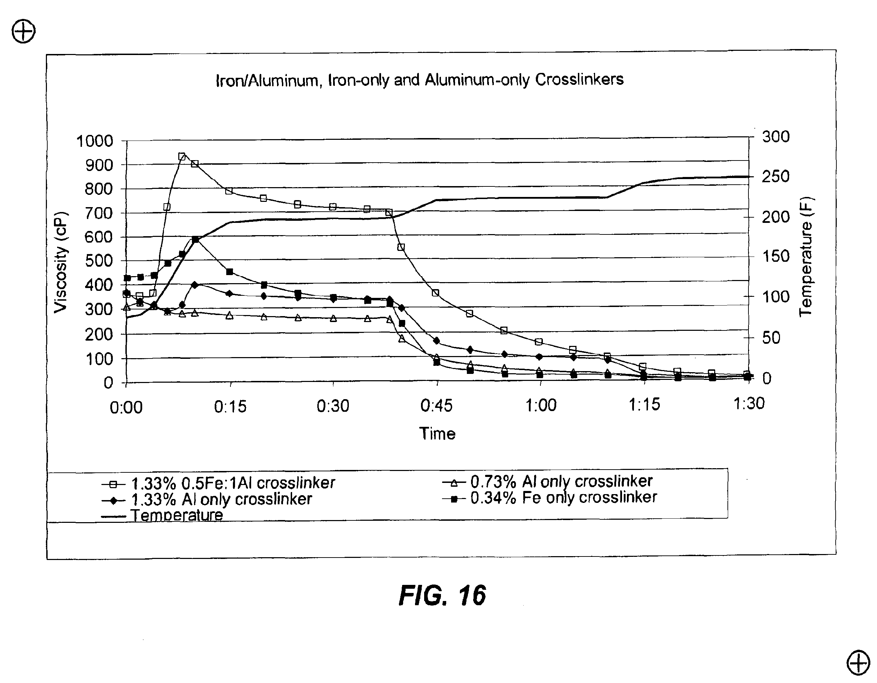

Next, viscosity testing was performed to test the differences observed when the iron is included with the aluminum for crosslinking. The iron/aluminum crosslinker tested gave more than twice the viscosity at 200°F (93 °C) than a xanthan gel crosslinked with the same concentration of aluminum ions. The source of aluminum ions used was aluminum ammonium sulfate. Each crosslinked fluid began as a 60 lb (7.2 kg/m³) xanthan gel and each was tested at a pH of about 4.3. The first fluid tested contained 0.73% of a crosslinker containing 1Al:3Lac:1AcO (0.46%Al), the second contained 1.33% of a crosslinker containing 1Al:3Lac:1AcO (0.246%Al), the third contained 1.33% of a crosslinker containing 0.5Fe:1Al:3Lac:1AcO (0.254%Fe, 0.246%Al), and the fourth contained 0.34% of a crosslinker containing 1Fe:3Lac:1AcO (0.992% Fe). While the crosslinked xanthan viscosity increases with 1.8x the aluminum concentration, the viscosity is still considerably lower than that observed in the iron/aluminum crosslinked system. Also noted in the test was that the iron/aluminum crosslinker also showed a faster gel break at temperatures of 225°F (107 °C) and above. As seen in Figure 16, a gel containing the same Al:Lac:AcO ratio performed better with added Fe.

Next, attempts were made to generate an aluminum-only crosslinked xanthan that had the performance of the mixed iron/aluminum crosslinker system. The attempts were not successful, and serve as a testament to the role of the iron ion in generating viscosity in the crosslinked xanthan system. First, the ligand ratios on the aluminum crosslinker were altered to attempt to improve the fluid characteristics, the fluids tested are shown below in Table 1:

**TABLE 1:**

| | |
|---|---|
| Fluid 1 (Fe/Al) | 60 lb (7.2 kg/m³) xanthan, 1.33 % 0.5Fe:1Al:3Lac:1AcO (0.254Fe, 0.246%Al), pH=4.34 |
| Fluid 2 (Al) | 60 lb (7.2 kg/m³) xanthan, 2% 1Al:3Lac:1AcO (0.46%Al), pH=4.26 |
| Fluid 3 (Al) | 60 lb (7.2 kg/m³) xanthan, 2% 1Al:3Lac (0.467%Al), pH=4.23 |
| Fluid 4 (Al) | 60 lb (7.2 kg/m³) xanthan, 2% 1Al:2Lac:2AcO (0.463%Al), pH=4.26 |
| Fluid 5 (Al) | 60 lb (7.2 kg/m³) xanthan, 2% 1Al:3Lac:1Gly (0.46%Al), pH=4.30 |

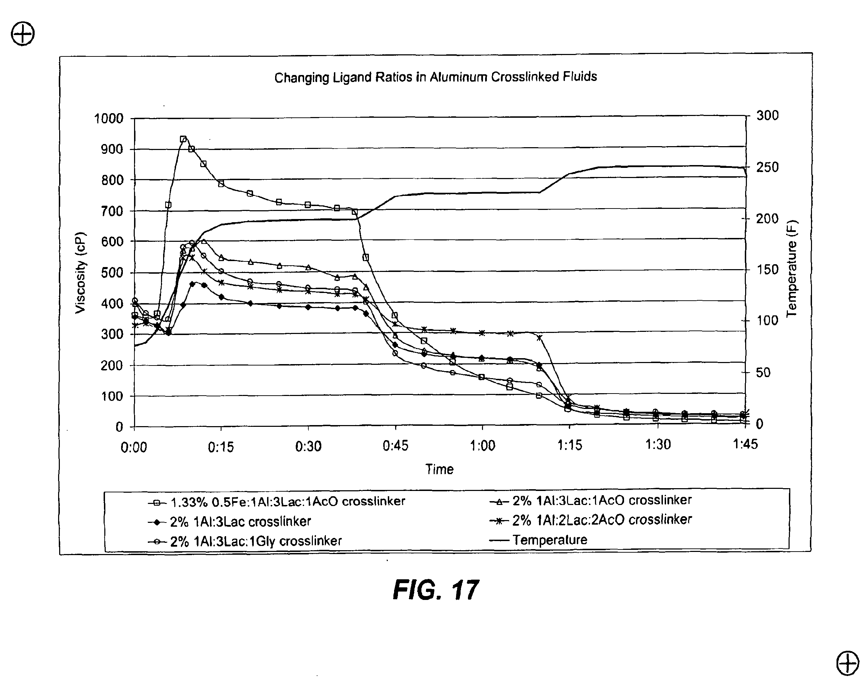

As shown in Figure 17, manipulating the ligand ratios was not sufficient to produce an aluminum crosslinked fluid that had the performance of the mixed iron/aluminum crosslinker system.

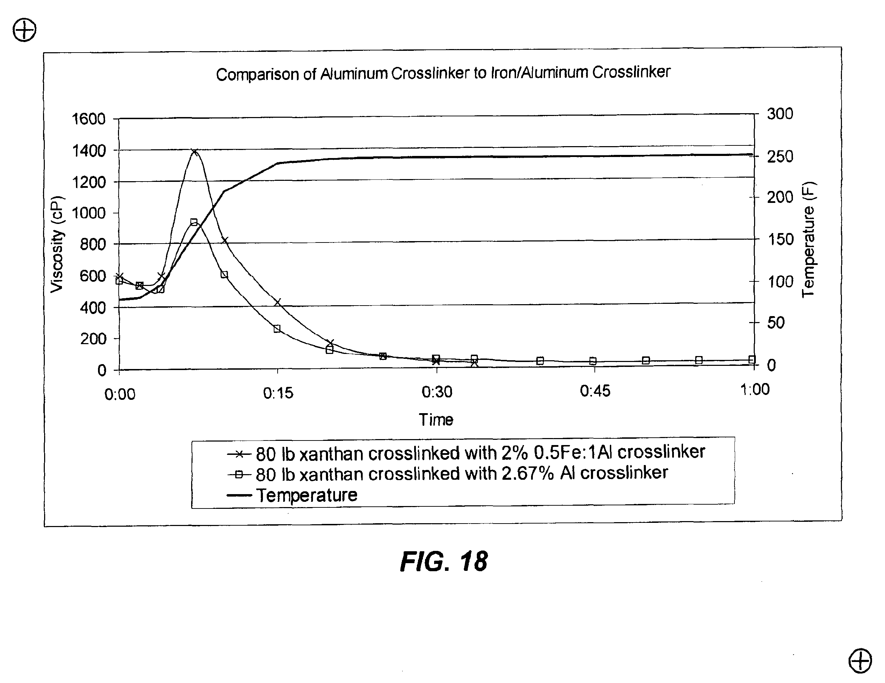

Another example of an inferior crosslinked aluminum-only xanthan system compared to the iron/aluminum xanthan system is seen in Figure 18, which compares the highest performing tested aluminum-only crosslinker (2.67% of 1Al:3Lac:1AcO (0.46%Al) compared to the highest performing tested iron/aluminum crosslinker (2% of 0.5Fe:1Al:3Lac:1AcO (0.254%Fe, 0.246%Al). While both fluids show a reduction in viscosity above about 200°F (93 °C), the iron/aluminum fluid maintains a higher viscosity.

### Example 8 - Effect of temperature on iron/aluminum crosslinked xanthan.

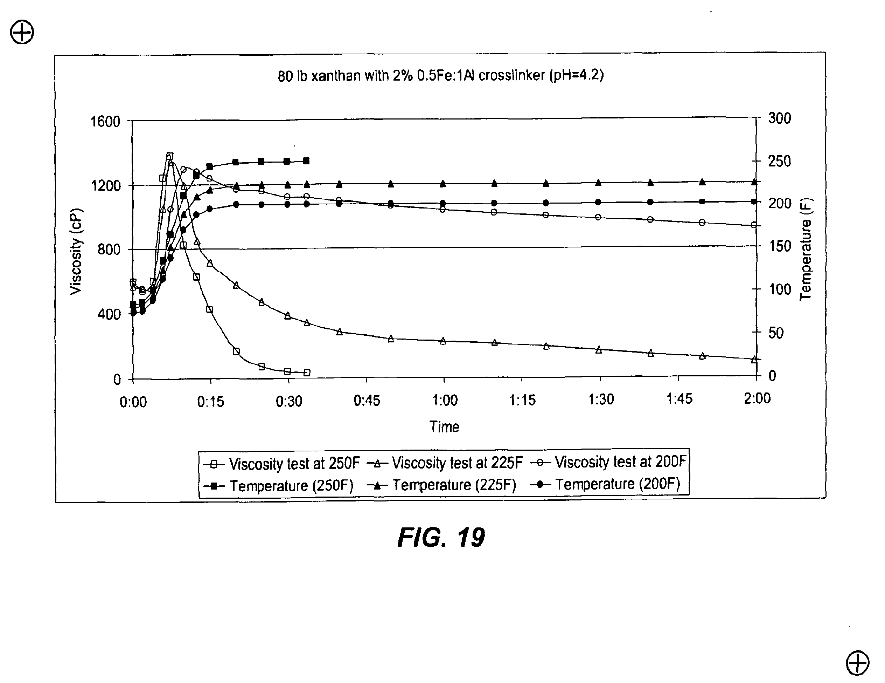

Next, the performance of an 80 Ib/Mgal xanthan crosslinked with 2% of an iron/aluminum crosslinker (0.5Fe:1Al:3Lac:1AcO (0.254%Fe, 0.246%Al)) was tested at 200°F (93 °C), 225°F (107 °C), 250°F (121 °C). The source of aluminum ions used was aluminum ammonium sulfate. As shown in Figure 19, the gel is stable at 200°F (93 °C), has some stability at 225°F (107 °C); and is stable for less than 30 minutes at 250°F (121 °C)

### Comparative Example 9 - Using citric acid coated with a delayed release material.

As noted above, the metal ion crosslinked gels of the present invention could be easily broken down by acid breakers such as citric acid whose release can be delayed using encapsulation with, for example, hydrogenated soybean oil or wax to afford clear solution without any trace of insoluble materials. While the low melting point of natural lipids and natural wax coatings limits their high temperature application, synthetic waxes can be used to overcome the problem. The synthetic waxes, such as ELVAX ® (a copolymer of ethylene and vinyl acetate commercially available from DuPont) are available with various melting temperatures.

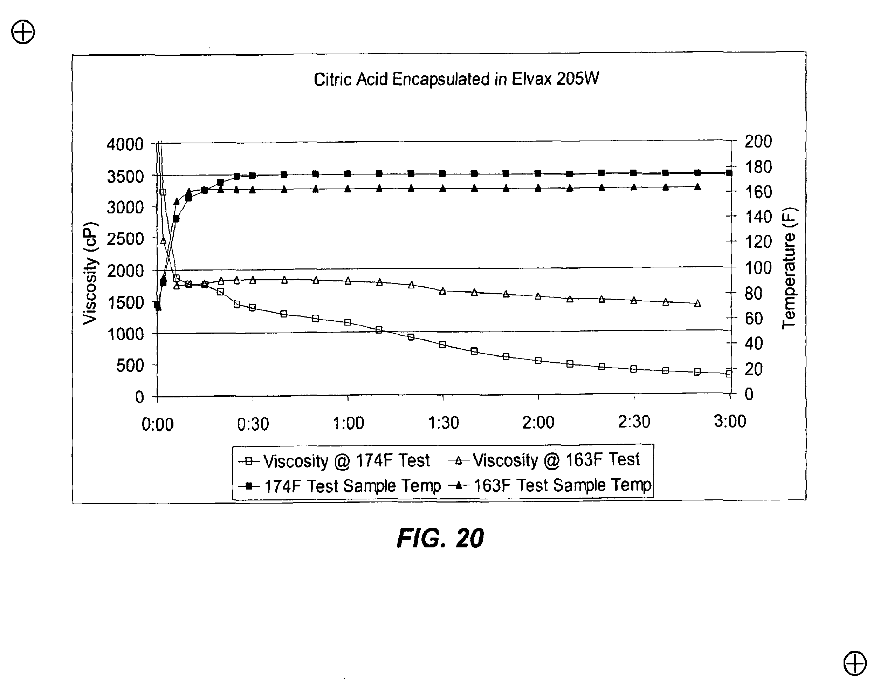

In one sample, citric acid powder was encapsulated in ELVAX 205W (having a softening point of 176°F (80 °C) by mixing 15 grams of citric acid with 35 grams of ELVAX at 85 °C in a Brabender and then extruding the mixture to form small particles of encapsulated citric acid. The ratio of citric acid to ELVAX 205W used was 30:70 by weight. This encapsulated citric acid was then used to break a gel (formed from 720 mg CMC and 100 mL Duncan, Oklahoma tap water and allowed to hydrate for 30 minutes before an aluminum-based crosslinker was added). The gel and breaker were then tested using a 44 mL sample in a Chandler 5550 viscometer with BX5 Bob at shear rate of 40 sec⁻¹ at 75°F (24 °C). The viscosity test was run first at 163°F (73 °C) and then at 174°F (79 °C) and the results, shown in Figure 20, show the breaking of gel occurs only over the softening point of the coating.

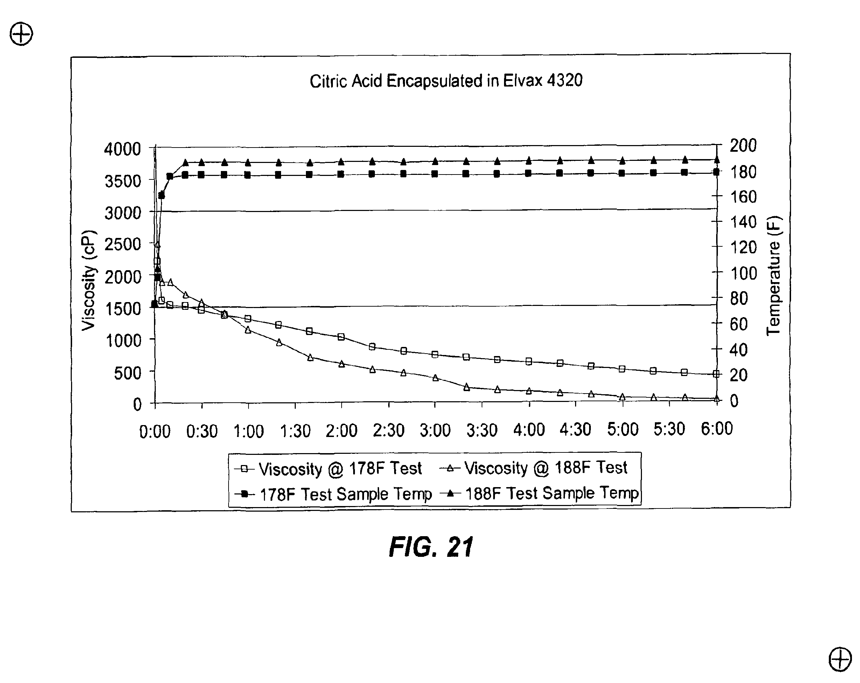

Another sample was prepared wherein citric acid powder was encapsulated in ELVAX 4320 (having a softening point of 195°F (91 °C)) by mixing 15 grams of citric acid with 35 grams of ELVAX at 95°C in a Brabender and then extruding the mixture to form small particles of encapsulated citric acid. The ratio of citric acid to ELVAX 4320 used is 30:70 by weight. This encapsulated citric acid was then used to break a gel (formed from 720 mg CMC and 100 mL Duncan, Oklahoma tap water and allowed to hydrate for 30 minutes before an aluminum-based crosslinker was added). The gel and breaker were then tested using a 44 mL sample in a Chandler viscometer with BX5 Bob at shear rate of 40 sec⁻¹ at 75°F (24 °C). The viscosity test was run first at 178°F (81 °C) and then at 188°F (87 °C) and the results, shown in Figure 21, again show the breaking of gel occurs only over the softening point of the coating.

### Comparative Example 10

The carboxymethylcellulose (CMC)-Xanthan treatment fluids prepared as shown in Table 2 (all fluids further include 1% KCl salt and 3 gal/Mgal (0.36 kg/m³) of a zirconium crosslinker (CL-23 commercially available form Halliburton Energy Services):

**TABLE 2**

| | **CMC** | **xanthan** | **Fann 35 Shear Rate (1/sec)** | | | | |
|---|---|---|---|---|---|---|---|
| **Sample** | **wt %** | **wt %** | **1023** | **511.5** | **341** | **170.5** | **10.23** |
| **A** | 0 | 100 | 22.4 | 33.4 | 41.9 | 62.8 | 448.6 |
| **B** | 20 | 80 | 20.9 | 30.4 | 37.4 | 55.3 | 324.0 |
| **C** | 30 | 70 | 20.9 | 28.9 | 34.4 | 47.8 | 174.5 |
| **D** | 50 | 50 | 19.9 | 25.9 | 29.9 | 29.9 | 39.9 |
| **E** | 70 | 30 | 19.7 | 25.4 | 26.9 | 25.4 | 24.9 |
| **F** | 80 | 20 | 18.7 | 22.9 | 22.4 | 19.4 | 20 |
| **G** | 100 | 0 | 21.7 | 27.4 | 30.7 | 35.9 | 39.9 |

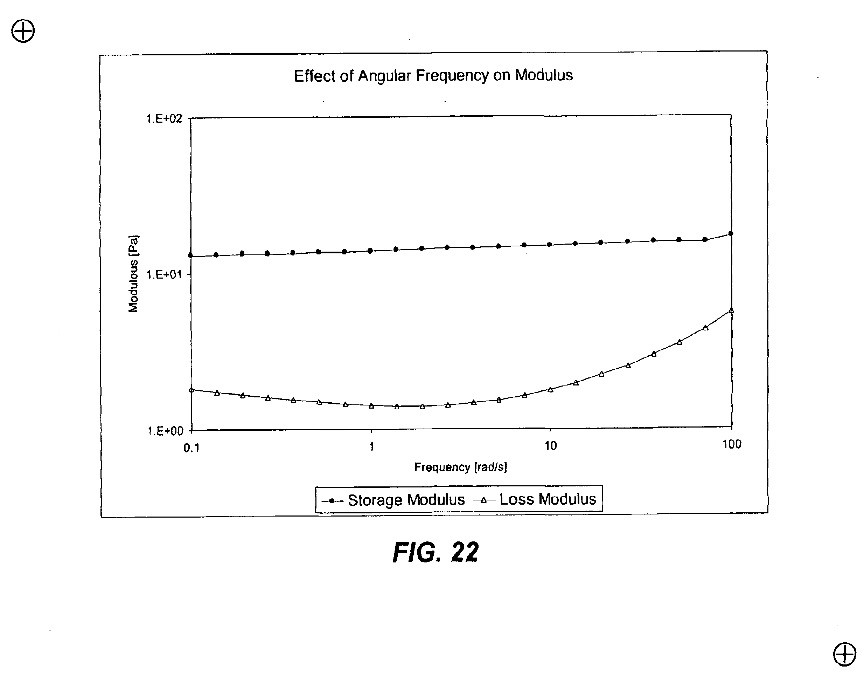

Figure 22 shows the results of dynamic moduli testing as a function of frequency at 71°F (22 °C), and the behavior of the storage (G') and loss (G") moduli of the gel denoted as Sample F. The experimental results show one distinct trend of the moduli with respect to the frequency region. Gel-like behavior was observed, where the G' is greater than the G" and both moduli exhibit their independency to frequency. Also, over the frequency range tested, G' displays a characteristic plateau region. The behavior is typical of a "strong gel" material that is observed when the characteristic relaxation time of the material is longer than the process time, that is, time per cycle of oscillation.

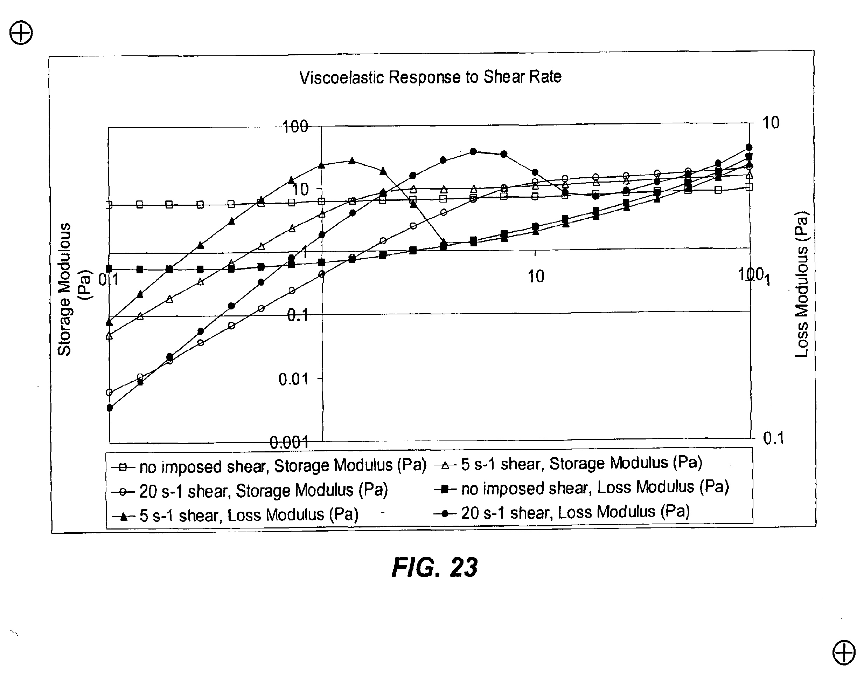

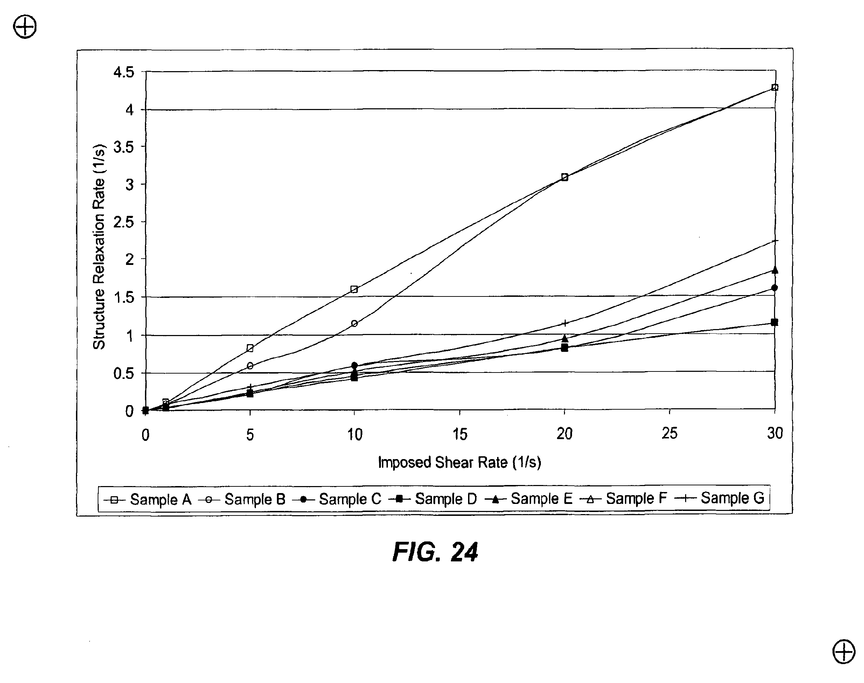

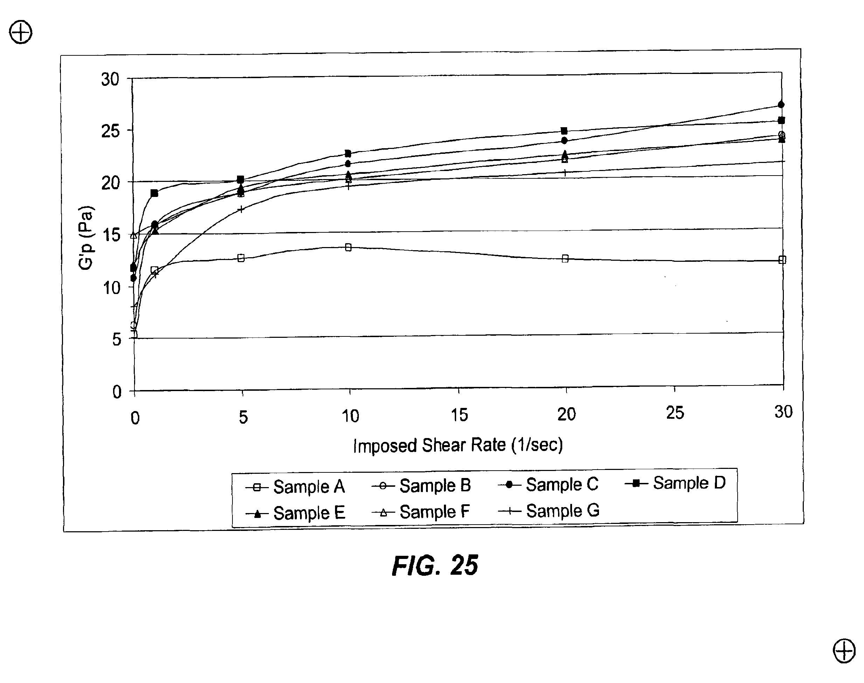

The structural relaxation of gels were measured using Strain-Rate Frequency Superposition (SRFS). In this technique, the amplitude of strain rate imposing a standard frequency sweep measurement is fixed as the frequency is varied. SRFS results of Sample F are shown in Figure 23. The viscoelastic response shown in Figure 23 depended strongly on strain rate and suggest that the sample had internal structures that relax faster in the presence of an imposed strain-rate. The results also showed that the value of the plateau modulus (G'p) of the mixture shifted to higher values as the imposed shear rate increases. This suggests an increasing number of network structures with shear rate. The relationship between structure relaxation and G'p as a function of imposed shear rate was tested and the results show in Figures 24 and 25, respectively. Figure 24 shows a plot of the structure relaxation of the samples versus imposed shear rate. The structure relaxation of CMC-xanthan mixtures was less dependent on shear rate than xanthan or CMC alone. Figure 25 shows that the G'p of the CMC-xanthan mixtures increased more rapidly and therefore they are stronger gels than CMC or xanthan alone.

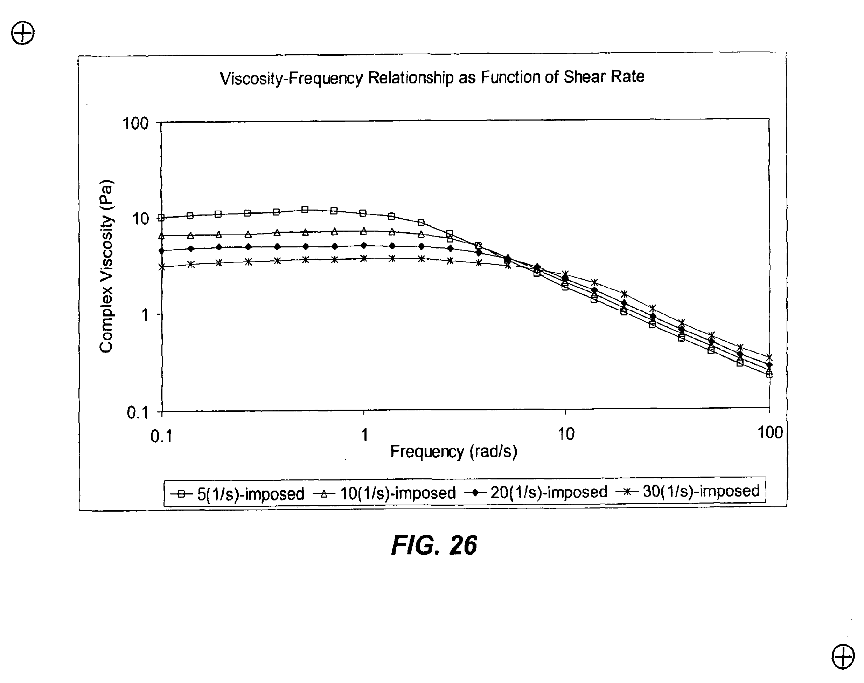

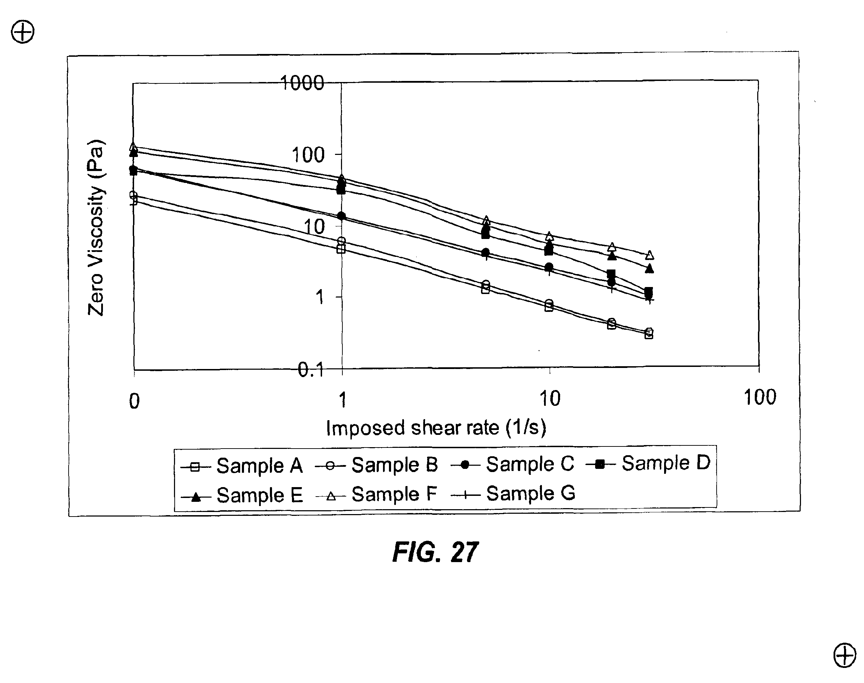

Figure 26 further shows the complex viscosity-frequency relationship for Sample G (which also comprised 0.4 gal/Mgal BA-20, a buffering agent commercially available from Halliburton Energy Services in Duncan, Oklahoma) as a function of imposed shear rate. The results showed that the viscosity of the samples decreases with increasing shear rate. Similar complex viscosity-frequency behavior was found for the samples listed in Table 2. Figure 27 showed the relationship between zero shear viscosity and imposed shear rate and the results demonstrate clearly that there was a strong synergistic effect of the CMC-Xanthan mixture on viscosity.

### Comparative Example 11 - Suspending ability of gelled fluids.

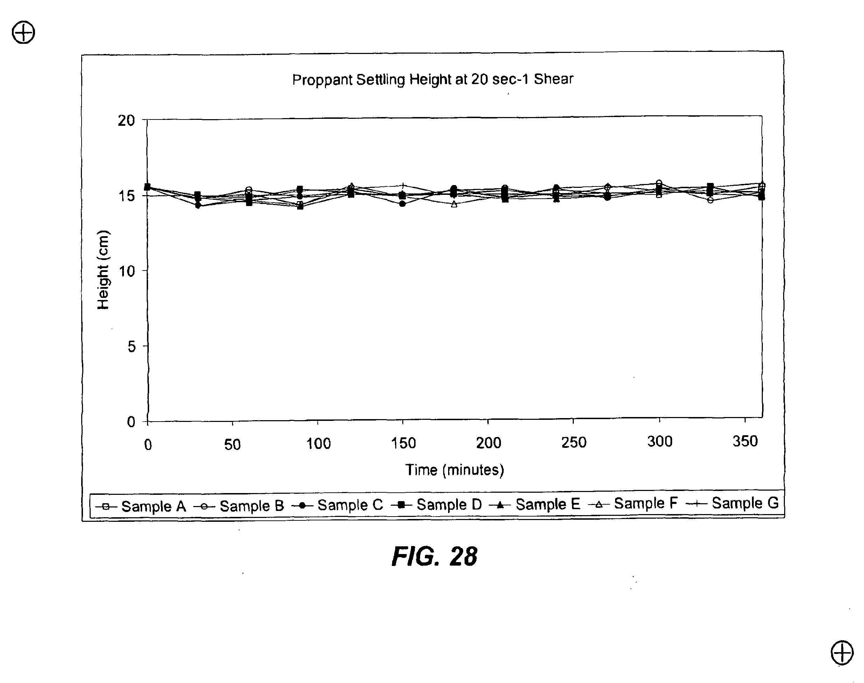

Suspending ability of the invented fluid under a given imposed shear condition was directly determined using the developed flow through device as described in Published Patent Application No. 2010/0018294. The settling profile was obtained from a standard CCD camera (resolution 1024 x 1000 pixels) captured at different time interval using a proprietary particle-interface software that operates on MATLAB® software and the *ImageJ* image processing package. The one-dimensional settling velocity fields (v_{yz}) of the settling interface were calculated by cross-correlating corresponding intensity region in two successive images to determine the settling interface between proppant and crosslinked fluid. Figure 28 shows a typical proppant suspending characteristic of 40 lb/Mgal CMC gel crosslinked with 2 gal/Mgal of CL-23 tested under static, defined as zero-imposed shear rate, condition. The sample was aged for 1 hour prior to taking any of the measurements. The dynamic settling was performed with imposed shear rate of 20 sec⁻¹. The dynamic experiment showed that there was minimal change in the settling profile of the crosslinked samples, suggesting that the treatment fluids can support proppant.

Therefore, the present invention is well adapted to attain the ends and advantages mentioned as well as those that are inherent therein. The particular embodiments disclosed above are illustrative only. Furthermore, no limitations are intended to the details of construction or design herein shown, other than as described in the claims below. It is therefore evident that the particular illustrative embodiments disclosed above may be altered or modified. All numbers and ranges disclosed above may vary by some amount. Also, the terms in the claims have their plain, ordinary meaning unless otherwise explicitly and clearly defined by the patentee. If there is any conflict in the usages of a word or term in this specification and one or more patent or other documents to which reference is made, the definitions that are consistent with this specification should be adopted. It will be appreciated that the invention may be modified within the scope of the appended claims.

## Claims

1. A method comprising: providing a low environmental impact treatment fluid comprising an aqueous base fluid, a viscosifying agent, and a compliant crosslinking agent that comprises an iron ion and an aluminum ion; and placing the treatment fluid in a subterranean formation.

2. A method according to claim 1, wherein the viscosifying agent is selected from the group consisting of a polysaccharide, a cellulose, a starch, a gelatin, an acrylamide, an acrylate, and any combination thereof.

3. A method according to any preceding claim, wherein the viscosifying agent is a compound selected from the group consisting of: a carboxymethylguar, a carboxymethylhydroxyethylguar, a carboxymethylhydroxypropylguar, a hydroxyethylcellulose, a carboxyethylcellulose, a carboxymethylcellulose, a carboxymethylhydroxyethylcellulose, a diutan gum, a xanthan gum, a galactomannan, a hydroxyethylguar, a hydroxypropylguar, a scleroglucan, a welan, a native starch, a modified starch, a cook-up starch, a pre-gelatinized starch, a chitosan, an alginate, a carrageenan, and any combination thereof.

4. A method according to any preceding claim, wherein the compliant viscosifying agent comprises a polysaccharide and a starch, or a compliant cellulosic viscosifying agent and a polysaccharide.

5. A method according to claim 1, wherein the viscosifying agent is a compliant viscosifying agent selected from the group consisting of carboxyethylcellulose, carboxymethylcellulose, carboxymethylhydroxyethylcellulose, and any combination thereof.

6. A method according to any preceding claim, wherein the treatment fluid further comprises a compliant dual-functional additive selected from the group consisting of ethyl formate, propyl formate, butyl formate, amyl formate, anisyl formate, methyl acetate, propyl acetate, triacetin, butyl propionate, isoamyl propionate, ethyl lactate, methyl butyrate, ethyl isobutyrate, butyl isobutyrate, diethyl malonate, butyl ethyl malonate, dimethyl succinate, diethyl succinate, diethyl malate, diethyl tartrate, dimethyl tartrate, triethyl citrate, and any combination thereof.

7. A method according to claim 1 or 6, wherein the treatment fluid comprises a viscosifying agent comprising carboxymethylcellulose and a compliant crosslinking agent that comprises an iron ion and an aluminum ion; and further comprises: a surfactant comprising sodium lauryl sulfate and polyoxyethylene (20) sorbitan monolaurate, wherein the treatment fluid optionally further comprises an encapsulated citric acid breaker, a compliant dual-functional additive comprising triethyl citrate or a combination thereof.

8. A method according to claim 1, wherein the viscosifying agent is a compliant viscosifying agent, and the treatment fluid further comprises a compliant dual-functional additive.

9. A method according to claim 8, wherein the compliant viscosifying agent is selected from the group consisting of a polysaccharide, a cellulose, a gelatin, an acrylamide, an acrylate, and any combination thereof.

10. A method according to claim 8 or 9, wherein the compliant viscosifying agent comprises a blend of a first compliant viscosifying agent and a second compliant viscosifying agent.

11. A method according to claim 10, wherein the first compliant viscosifying agent is a cellulose derivative selected from the group consisting of: a carboxymethylguar, a carboxymethylhydroxyethylguar, a carboxymethylhydroxypropylguar, a hydroxyethylcellulose, a carboxyethylcellulose, a carboxymethylcellulose, a carboxymethylhydroxyethylcellulose, and any combination thereof.

12. A method according to claim 10 or 11, wherein the second compliant viscosifying agent is a polysaccharide selected from the group consisting of: a diutan gum, a xanthan gum, a galactomannan, a hydroxyethylguar, a hydroxypropylguar, a scleroglucan, a welan, a native starch, a modified starch, a cook-up starch, a pre-gelatinized starch, a chitosan, an alginate, a carrageenan, and any combination thereof.

13. A method according to any one of claims 8 to 12, wherein the compliant dual-functional additive is a liquid selected from the group consisting of: ethyl formate, propyl formate, butyl formate, amyl formate, anisyl formate, methyl acetate, propyl acetate, triacetin, butyl propionate, isoamyl propionate, ethyl lactate, methyl butyrate, ethyl isobutyrate, butyl isobutyrate, diethyl malonate, butyl ethyl malonate, dimethyl succinate, diethyl succinate, diethyl malate, diethyl tartrate, dimethyl tartrate, triethyl citrate, and any combination thereof.

14. A method according to any preceding claim, wherein the treatment fluid further comprises an encapsulated breaker.

15. A method according to any one of claims 1 to 4 or 6 to 14, wherein the subterranean formation comprises a bottom hole temperature of up to and including 275°F (135°C).

16. A method according to any preceding claim, wherein the treatment fluid is placed in the subterranean formation as part of a subterranean operation selected from the group consisting of a drilling operation, a fracturing operation, a completion operation, and a workover operation.

17. A method comprising: providing a providing a low environmental impact fracturing fluid comprising an aqueous base fluid a compliant viscosifying agent, and a compliant crosslinking agent that comprises an iron ion and an aluminum ion; and introducing the fracturing fluid into at least a portion of a subterranean formation at a rate and pressure sufficient to create or enhance at least one or more fractures in the subterranean formation.

## Patentansprüche

1. Verfahren, umfassend: Bereitstellen eines umweltschonenden Behandlungsfluids, umfassend ein Fluid auf wässriger Basis, ein Viskosifizierungsmittel und ein verträgliches Vernetzungsmittel, das ein Eisenion und ein Aluminiumion umfasst; und Platzieren des Behandlungsfluids in einer unterirdischen Formation.

2. Verfahren nach Anspruch 1, wobei das Viskosifizierungsmittel ausgewählt wird aus der Gruppe bestehend aus einem Polysaccharid, einer Cellulose, einer Stärke, einer Gelatine, einem Acrylamid, einem Acrylat und einer beliebigen Kombination davon.

3. Verfahren nach einem der vorangehenden Ansprüche, wobei das Viskosifizierungsmittel eine Verbindung ist, die ausgewählt wird aus der Gruppe bestehend aus: einem Carboxymethylguar, einem Carboxymethylhydroxyethylguar, einem Carboxymethylhydroxypropylguar, einer Hydroxyethylcellulose, einer Carboxyethylcellulose, einer Carboxymethylcellulose, einer Carboxymethylhydroxyethylcellulose, einem Diutangummi, einem Xanthangummi, einem Galactomannan, einem Hydroxyethylguar, einem Hydroxypropylguar, einem Scleroglucan, einem Welan, einer nativen Stärke, einer modifizierten Stärke, einer Aufkochstärke, einer vorgelatinisierten Stärke, einem Chitosan, einem Alginat, einem Carrageen und einer beliebigen Kombination davon.

4. Verfahren nach einem der vorangehenden Ansprüche, wobei das verträgliche Viskosifizierungsmittel ein Polysaccharid und eine Stärke oder ein verträgliches cellulosisches Viskosifizierungsmittel und ein Polysaccharid umfasst.

5. Verfahren nach Anspruch 1, wobei das Viskosifizierungsmittel ein verträgliches Viskosifizierungsmittel ist, das ausgewählt wird aus der Gruppe bestehend aus Carboxyethylcellulose, Carboxymethylcellulose, Carboxymethylhydroxyethylcellulose und einer beliebigen Kombination davon.

6. Verfahren nach einem der vorangehenden Ansprüche, wobei das Behandlungsfluid ferner ein verträgliches Additiv mit Doppelfunktion umfasst, ausgewählt aus der Gruppe bestehend aus Ethylformiat, Propylformiat, Butylformiat, Amylformiat, Anisylformiat, Methylacetat, Propylacetat, Triacetin, Butylpropionat, Isoamylpropionat, Ethyllactat, Methylbutyrat, Ethylisobutyrat, Butylisobutyrat, Diethylmalonat, Butylethylmalonat, Dimethylsuccinat, Diethylsuccinat, Diethylmaleat, Diethyltartrat, Dimethyltartrat, Triethylcitrat und einer beliebigen Kombination davon.

7. Verfahren nach Anspruch 1 oder 6, wobei das Behandlungsfluid ein Viskosifizierungsmittel umfasst, das Carboxymethylcellulose und ein verträgliches Vernetzungsmittel umfasst, das ein Eisenion und ein Aluminiumion umfasst; und ferner Folgendes umfasst: ein Tensid, das Natriumlaurylsulfat und Polyoxyethylen-(2o)-Sorbitanmonolaureat umfasst, wobei das Behandlungsfluid wahlweise ferner ein verkapseltes Citronensäureaufbrechmittel, ein verträgliches Additiv mit Doppelfunktion umfasst, das Triethylcitrat oder eine Kombination davon umfasst.

8. Verfahren nach Anspruch 1, wobei das Viskosifizierungsmittel ein verträgliches Viskosifizierungsmittel ist und das Behandlungsfluid ferner ein verträgliches Additiv mit Doppelfunktion umfasst.

9. Verfahren nach Anspruch 8, wobei das verträgliche Viskosifizierungsmittel ausgewählt wird aus der Gruppe bestehend aus einem Polysaccharid, einer Cellulose, einer Gelatine, einem Acrylamid, einem Acrylat und einer beliebigen Kombination davon.

10. Verfahren nach Anspruch 8 oder 9, wobei das verträgliche Viskosifizierungsmittel eine Mischung aus einem ersten verträglichen Viskosifizierungsmittel und einem zweiten verträglichen Viskosifizierungsmittel umfasst.

11. Verfahren nach Anspruch 10, wobei das erste verträgliche Viskosifizierungsmittel ein Cellulosederivat ist, ausgewählt aus der Gruppe bestehend aus: einem Carboxymethylguar, einem Carboxymethylhydroxyethylguar, einem Carboxymethylhydroxypropylguar, einer Hydroxyethylcellulose, einer Carboxyethylcellulose, einer Carboxymethylcellulose, einer Carboxymethylhydroxyethylcellulose und einer beliebigen Kombination davon.

12. Verfahren nach Anspruch 10 oder 11, wobei das zweite verträgliche Viskosifizierungsmittel ein Polysaccharid ist, ausgewählt aus der Gruppe bestehend aus:
einem Diutangummi, einem Xanthangummi, einem Galactomannan, einem Hydroxyethylguar, einem Hydroxypropylguar, einem Scleroglucan, einem Welan, einer nativen Stärke, einer modifizierten Stärke, einer Aufkochstärke, einer vorgelatinisierten Stärke, einem Chitosan, einem Alginat, einem Carrageen und einer beliebigen Kombination davon.

13. Verfahren nach einem der Ansprüche 8 bis 12, wobei das verträgliche Additiv mit Doppelfunktion eine Flüssigkeit ist, ausgewählt aus der Gruppe bestehend aus: Ethylformiat, Propylformiat, Butylformiat, Amylformiat, Anisylformiat, Methylacetat, Propylacetat, Triacetin, Butylpropionat, Isoamylpropionat, Ethyllactat, Methylbutyrat, Ethylisobutyrat, Butylisobutyrat, Diethylmalonat, Butylethylmalonat, Dimethylsuccinat, Diethylsuccinat, Diethylmaleat, Diethyltartrat, Dimethyltartrat, Triethylcitrat und einer beliebigen Kombination davon.

14. Verfahren nach einem der vorangehenden Ansprüche, wobei das Behandlungsfluid ferner ein verkapseltes Aufbrechmittel umfasst.

15. Verfahren nach einem der Ansprüche 1 bis 4 oder 6 bis 14, wobei die unterirdische Formation eine Bohrlochsohlentemperatur von bis zu und einschließlich 275 °F (135 °C) umfasst.

16. Verfahren nach einem der vorangehenden Ansprüche, wobei das Behandlungsfluid als Teil eines unterirdischen Vorgangs ausgewählt aus der Gruppe bestehend aus einem Bohrvorgang, einem Frakturierungsvorgang, einem Komplettierungsvorgang und einem Aufwältigungsvorgang (Workover) in der unterirdischen Formation angeordnet wird.

17. Verfahren, umfassend: Bereitstellen eines umweltschonenden Frakturierungsfluids, umfassend ein Fluid auf wässriger Basis, ein verträgliches Viskosifizierungsmittel und ein verträgliches Vernetzungsmittel, das ein Eisenion und ein Aluminiumion umfasst; und Einbringen des Frakturierungsfluids in wenigstens einen Teil einer unterirdischen Formation mit einer Rate und einem Druck, die ausreichen, um wenigstens eine oder mehrere Frakturen in der unterirdischen Formation zu erzeugen oder zu verstärken.

## Revendications

1. Procédé comprenant l'utilisation d'un fluide de traitement à faible impact sur l'environnement comprenant un fluide aqueux de base, un agent de viscosification et un agent de réticulation conforme qui contient un ion fer et un ion aluminium ; et le placement du fluide de traitement dans une formation souterraine.

2. Procédé selon la revendication 1, dans lequel l'agent de viscosification est choisi dans l'ensemble constitué d'un polysaccharide, d'une cellulose, d'un amidon, d'une gélatine, d'un acrylamide, d'un acrylate, et de toute combinaison de ceux-ci.

3. Procédé selon l'une quelconque des revendications précédentes, dans lequel l'agent de viscosification est un composé choisi dans l'ensemble constitué des composés suivants : un carboxyméthylguar, un carboxyméthylhydroxyéthylguar, un carboxyméthylhydroxy-propylguar, une hydroxyéthylcellulose, une carboxyéthylcellulose, une carboxyméthyl-cellulose, une carboxyméthylhydroxyéthylcellulose, une gomme de diutane, une gomme de xanthane, un galactomannane, un hydroxyéthylguar, un hydroxypropylguar, un scléroglucane, un wélane, un amidon natif, un amidon modifié, un amidon cuisiné, un amidon prégélatinisé, un chitosane, un alginate, une carraghénine et toute combinaison de ceux-ci.

4. Procédé selon l'une quelconque des revendications précédentes, dans lequel l'agent de viscosification conforme contient un polysaccharide et un amidon, ou un agent de viscosification cellulosique conforme et un polysaccharide.

5. Procédé selon la revendication 1, dans lequel l'agent de viscosification est un agent de viscosification conforme choisi dans l'ensemble constitué de carboxyéthylcellulose, de carboxyméthylcellulose, de carboxyméthylhydroxyéthylcellulose et de toute combinaison de ceux-ci.

6. Procédé selon l'une quelconque des revendications précédentes, dans lequel le fluide de traitement contient en outre un adjuvant à double fonctionnalité choisi dans l'ensemble constitué de formate d'éthyle, de formate de propyle, de formate de butyle, de formate d'amyle, de formate d'anisyle, d'acétate de méthyle, d'acétate de propyle, de triacétine, de propionate de butyle, de propionate d'isoamyle, de lactate d'éthyle, de butyrate de méthyle, d'isobutyrate d'éthyle, d'isobutyrate de butyle, de malonate de diéthyle, de malonate de butyl éthyle, de succinate de diméthyle, de succinate de diéthyle, de malate de diéthyle, de tartrate de diéthyle, de tartrate de diméthyle, de citrate de triéthyle et de toute combinaison de ceux-ci.

7. Procédé selon la revendication 1 ou 6, dans lequel le fluide de traitement comprend un agent de viscosification contenant de la carboxyméthylcellulose et un agent de réticulation conforme qui contient un ion fer et un ion aluminium ; et qui comprend en outre : un tensioactif contenant du sulfate de lauryl sodium et du monolaurate de polyoxyéthylène (20) sorbitane, le fluide de traitement contenant en outre éventuellement un rupteur acide citrique encapsulé, un adjuvant fonctionnel double conforme contenant du citrate de triéthyle ou une combinaison de ceux-ci.

8. Procédé selon la revendication 1, dans lequel l'agent de viscosification est un agent de viscosification conforme, et où le fluide de traitement contient en outre un adjuvant à double fonctionnalité conforme.

9. Procédé selon la revendication 8, dans lequel l'agent de viscosification est choisi dans l'ensemble constitué d'un polysaccharide, d'une cellulose, d'une gélatine, d'un acrylamide, d'un acrylate et de toute combinaison de ceux-ci.

10. Procédé selon la revendication 8 ou 9, dans lequel l'agent de viscosification conforme contient un mélange d'un premier agent de viscosification conforme et d'un deuxième agent de viscosification conforme.

11. Procédé selon la revendication 10, dans lequel le premier agent de viscosification conforme est un dérivé de cellulose choisi dans l'ensemble constitué de : un carboxyméthylguar, un carboxyméthylhydroxyéthylguar, un carboxyméthylhydroxypropyl-guar, une hydroxyéthylcellulose, une carboxyéthylcellulose, une carboxyméthylcellulose, un carboxyméthylhydroxyéthylcellulose et toute combinaison de ces composés.

12. Procédé selon la revendication 10 ou 11, dans lequel le deuxième agent de viscosification conforme est un polysaccharide choisi dans l'ensemble constitué des composés suivants : une gomme de diutane, une gomme de xanthane, un galactomannane, un hydroxyéthylguar, un hydroxypropylguar, un scléroglucane, un wélane, un amidon natif, un amidon modifié, un amidon cuisiné, un amidon prégélatinisé, un chitosane, un alginate, une carraghénine et toute combinaison de ceux-ci.

13. Procédé selon l'une quelconque des revendications 8 à 12, dans lequel l'adjuvant conforme à double fonctionnalité est un liquide choisi dans l'ensemble constitué des composés suivants : formate d'éthyle, formate de propyle, formate de butyle, formate d'amyle, formate d'anisyle, acétate de méthyle, acétate de propyle, triacétine, propionate de butyle, propionate d'isoamyle, lactate d'éthyle, butyrate de méthyle, isobutyrate d'éthyle, isobutyrate de butyle, malonate de diéthyle, malonate de butyl éthyle, succinate de diméthyle, succinate de diéthyle, malate de diéthyle, tartrate de diéthyle, tartrate de diméthyle, citrate de triéthyle et toute combinaison de ceux-ci.

14. Procédé selon l'une quelconque des revendications précédentes, dans lequel le fluide de traitement comprend en outre un rupteur encapsulé.

15. Procédé selon l'une quelconque des revendications 1 à 4 ou 6 à 14, dans lequel la formation souterraine a une température de puits de forage pouvant atteindre 275 °F (135 ° C).

16. Procédé selon l'une quelconque des revendications précédentes, dans lequel le fluide de traitement est placé dans la formation souterraine sous forme de partie d'une opération souterraine choisie dans l'ensemble constitué d'une opération de forage, d'une opération de fracturation, d'une opération de complétion et d'une opération de reconditionnement.

17. Procédé comprenant : l'utilisation d'un fluide de fracturation à impact environnemental contenant un fluide aqueux de base et un agent de viscosification conforme, et un agent de réticulation conforme qui contient un ion fer et un ion aluminium ; et l'introduction du fluide de fracturation dans au moins une partie d'une formation souterraine à un débit et sous une pression suffisants pour créer ou pour améliorer au moins une ou plusieurs fractures dans la formation souterraine.
